# EUROPEAN PATENT SPECIFICATION

(11) **EP 1 883 041 B1**
(45) Date of publication and mention of the grant of the patent: **20.06.2012**
(21) Application number: 06746547.6
(22) Date of filing: 17.05.2006
(51) Int. Cl.: G06K 19/07, G06F 3/08, G06K 17/00

(54) **MEMORY CARD AND CARD ADAPTER**
SPEICHERKARTE UND KARTENADAPTER
CARTE MEMOIRE ET SON ADAPTATEUR

(30) Priority: 18.05.2005 JP 2005145437
(43) Date of publication of application: 30.01.2008
(73) Proprietor: Sony Corporation, Tokyo (JP); Renesas Technology Corp., Tokyo 100-6334 (JP)
(72) Inventor: AOKI, Yoshitaka, Minato-ku Tokyo (JP); TSUTSUI, Keiichi, Minato-ku Tokyo (JP); NISHIZAWA, Hirotaka, c/o RENESAS TECHNOLOGY CORP., Chiyoda-ku, Tokyo 100-6334 (JP); TOTSUKA, Takashi, c/o RENESAS TECHNOLOGY CORP., Chiyoda-ku, Tokyo 100-6334 (JP)
(74) Representative: Müller - Hoffmann & Partner
(86) International application number: PCT/JP2006/309844
(87) International publication number: WO 2006/123707

(56) References cited:
- WO-A1-01/84490
- WO-A2-2004/019261
- JP-A- 2001 209 773
- JP-A- 2001 513 245
- JP-A- 2003 532 936
- US-A1- 2001 009 505
- US-A1- 2005 005 045

## Description

### Technical Field

The present invention relates to a memory card.

### Background Art

Memory cards are well known which include a rewritable flash memory to which data can be written and from which written data can be read.

The memory card of this type is inserted in a card slot of an external device such as a personal computer, mobile phone or the like to write and read data to and from it.

There have been available various types of memory cards including, for example, a Memory Stick (registered trademark of Sony), Multimedia Card (MMC: Multimedia Card Infineon Technologies: registered trademark of AGC), SD Card (registered trademark of Matsushita Electric Industrial, Toshiba Corporation and Sandisk), etc.

Memory cards are different from each other in interface for data communication with an external device, namely, in standards for types and number of signals used for the data communication, in procedure of the data communication, etc. On this account, a technology for using one memory card with multiple types of interfaces has been proposed in the Japanese Patent Laid Open No. 2003-30613. The technology is such that with the plural types of interfaces pre-set in the memory card, the memory card is used with one of the interfaces, selected as necessary. More specifically, an on or off signal is generated by mechanically moving a switch provided on the memory card and one of the interfaces pre-set in the memory card is selected based on the on or off signal.

### Disclosure of the Invention

However, the memory card configured based on the above technology is disadvantageous in that the card slot portion of an external device through which the memory card is to be removably loaded should be shaped to turn on the switch or be provided with a projection to turn on the switch or the switch should be turned on by hand, which means that the memory card is not user-friendly.

Also, the above memory cards are different in size and shape from one type to another. On this account, a memory card may be designed smaller in size than the above existing memory cards and be inserted in a card adapter which is to be inserted into the card slot of the external device. In this case, the card adapter is configured to be approximate in contour, terminal shape and terminal disposition to the above existing memory cards.

Use of such a card adapter permits to use the smaller-size memory card similarly to the existing memory cards. Also in this case, in case the memory cards have only a single type of interface set therein, since card adapters different in type from each other prepared for the memory cards will not be able to write and read data to and from a device such as an external device, so it is necessary to set a plurality of interfaces in a memory card and select one of them for use as necessary.

US 2001/0009505 discloses a memory card comprising a substrate, a controller, a memory unit and first connector terminals for data communication as well as second connector terminals. When the card is inserted into a card socket of a multi media card based memory card, some of the terminals can reach floating. Upon detecting such a floating, the controller chip sets a one bit mode corresponding to the type of the memory card.

US 2005/0005045 discloses a multi-standard protocol storage device having a plurality of pre-set interfaces selected by an interface select signal.

WO 2004/019261 is directed to a SIM card comprising a substrate, an IC chip mounted thereon and provided with a dual interface for contact and non-contact communication. Antenna terminals of the IC chip are connected to special antenna terminals of the terminals of the SIM card.

It is the object of the invention to provide a memory card having provided therein a plurality of interfaces of which any one can be selected as necessary with only a minimum number of contacts provided.

According to the present invention, this object is achieved by a memory card according to claim 1. Preferred embodiments are given in the dependent claims.

In the above memory card according to the present invention, one of the plural types of interfaces is selected based on an interface select signal supplied via the second contacts and data communication is made via the selected interface. So, just by inserting the memory card into the memory card slot of the external device, an interface corresponding to that of the external device is selected in the memory card, which will improve the user-friendliness of the memory card.

Also, since it is not necessary to provide any interface select switch on the memory card and to provide any structure for turning on the switch in the memory card slot of the external device, the memory card and external device can be produced with less cost.

The foregoing and other features, aspects and advantages of the present invention will be come apparent from the following detailed description of embodiments of the present invention when taken in conjunction with the accompanying drawings.

### Brief Description of the Drawings

FIG. 1 is a perspective view, from above, of a memory card as the present invention.
FIG. 2 is a perspective view, from below, of the memory card in FIG. 1.
FIG. 3 is a bottom view of the memory card.
FIG. 4 is a sectional view taken along the line IV-IV in FIG. 3.
FIG. 5 is a block diagram of a memory card as an example, showing the internal configuration of the memory card.
FIG. 6 is a block diagram of an example of the memory card.
FIG. 7 is a block diagram of another example of the memory card.
FIG. 8 is a block diagram of a memory card as a first embodiment of the present invention, showing the internal configuration of the memory card.
FIG. 9 is a circuit diagram of an example of a signal separator provided in a select signal generator.
FIG. 10 is a circuit diagram of another example of the signal separator provided in the select signal selector.
FIG. 11 is a circuit diagram of still another example of the signal separator provided in the select signal selector.
FIG. 12 explains the operation of a data communication unit in the memory card.
FIG. 13 is a block diagram of a memory card as an example, showing the internal configuration of the memory card.
FIG. 14 shows a frequency response curve depicting the frequency band of a radio signal usable in the data communication unit in a memory card.
FIG. 15 is a circuit diagram of an example of the select signal generator.
FIG. 16 is a circuit diagram of another example of the select signal generator.
FIG. 17 is a circuit diagram of still another example of the select signal generator.
FIG. 18 is a perspective view of a Memory Stick.
FIG. 19 is a plan view of a Multimedia Card.
FIG. 20 is a block diagram of a memory card.
FIG. 21 is a perspective view of a memory card.
FIG. 22 is block diagram of the memory card of Figs 21.
FIG. 23 is a plan view of a card adapter for the Memory Stick.
FIG. 24 is a plan view of a card adapter for the Multimedia Card.
FIG. 25 is a plan view of a card adapter for an SD Card.
FIG. 26 is a plan view of another example of the card adapter for the SD Card.

### Best Mode for Carrying Out the Invention

The present invention will be described in detail below concerning some embodiments thereof with reference to the accompanying drawings.

First, the present invention will be explained concerning a memory card with reference to the accompanying drawings.

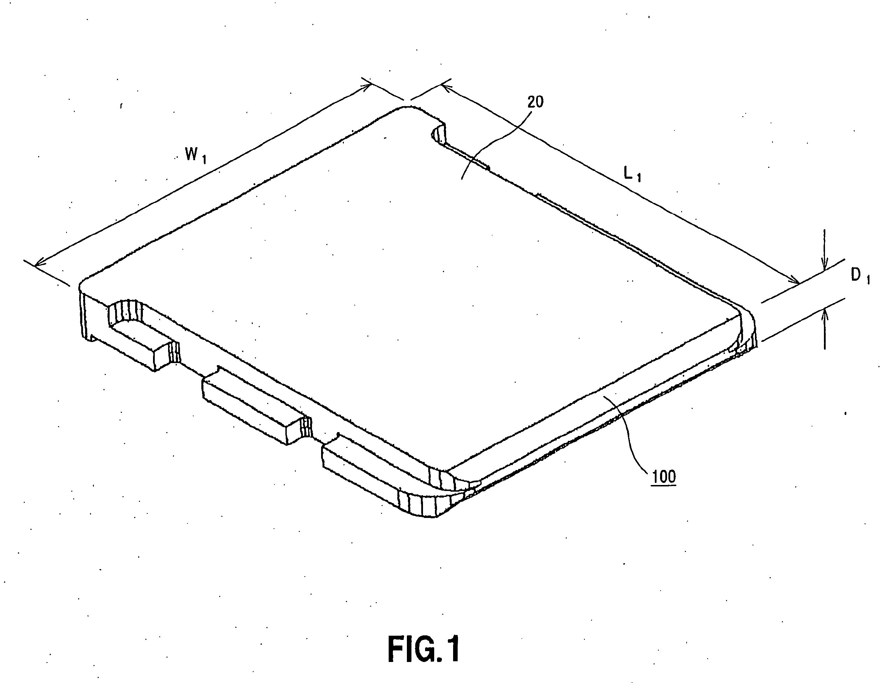

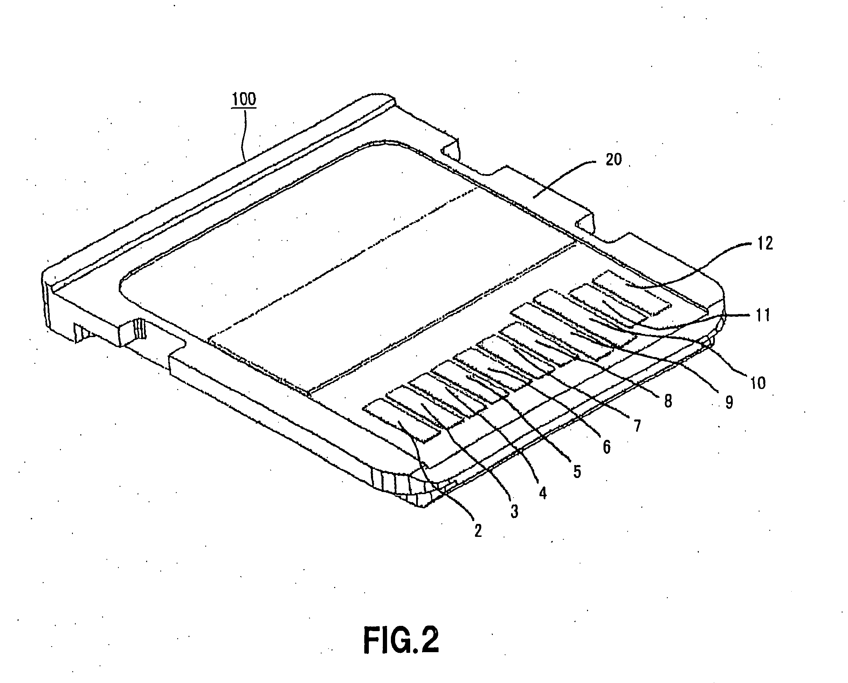

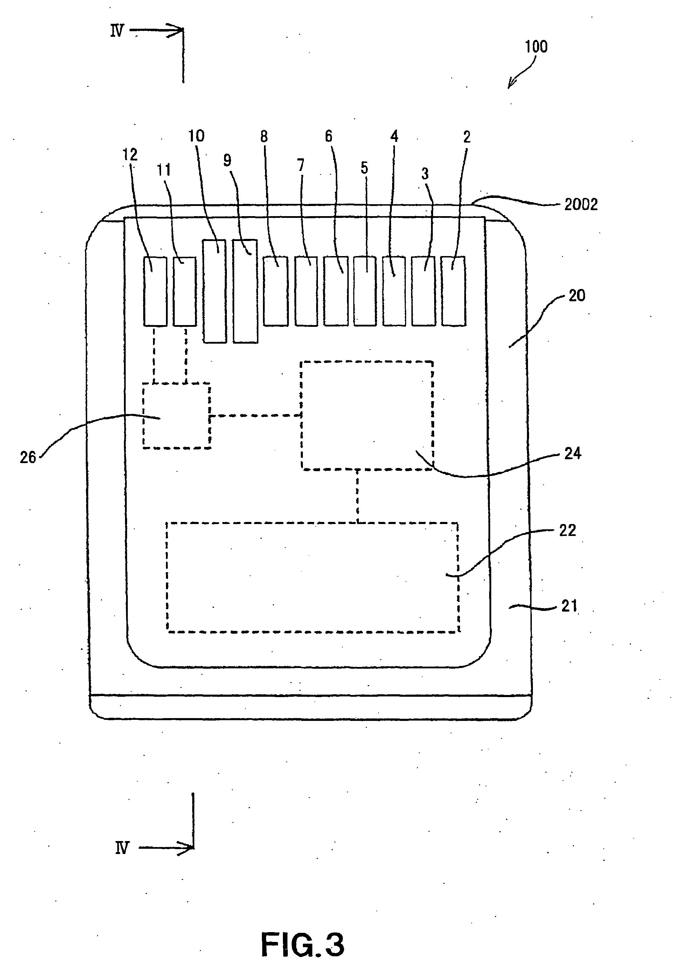

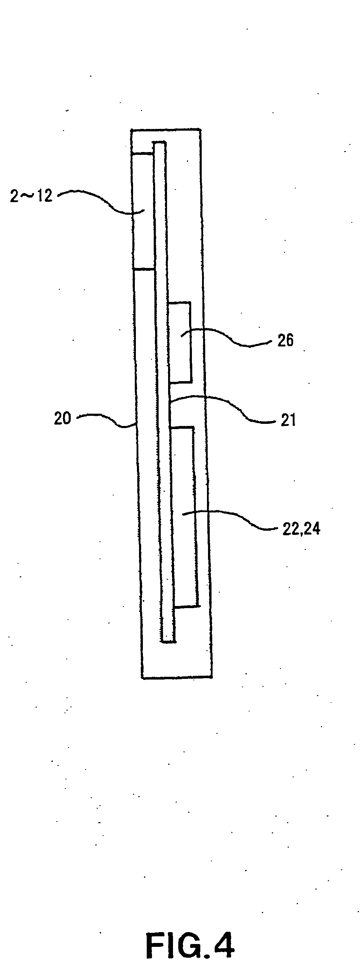

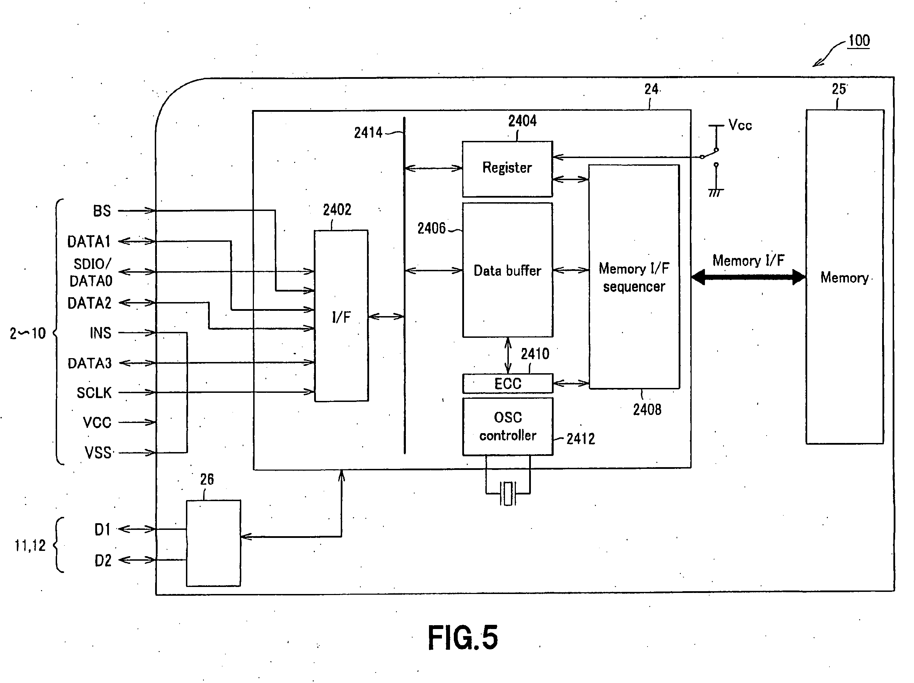

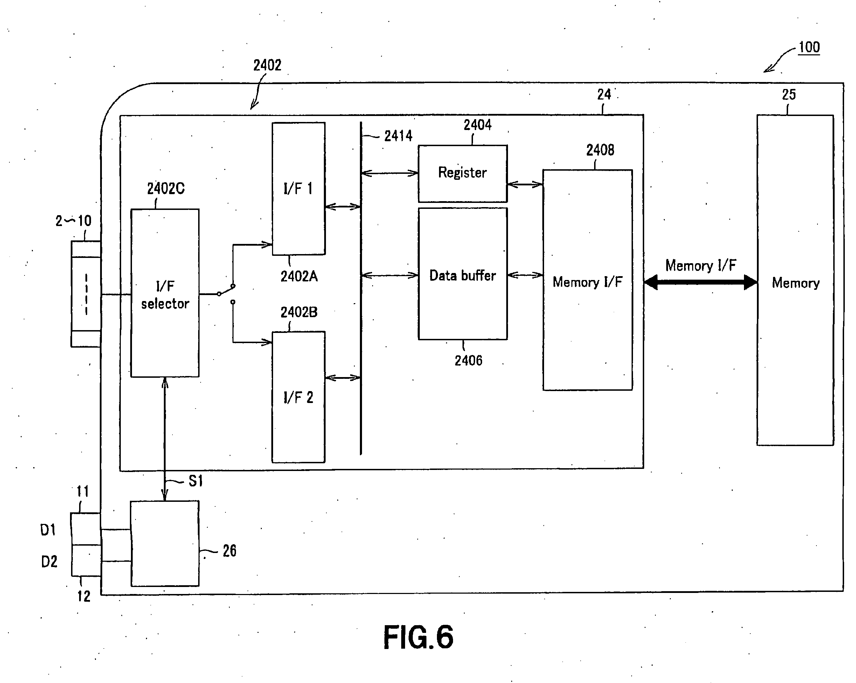

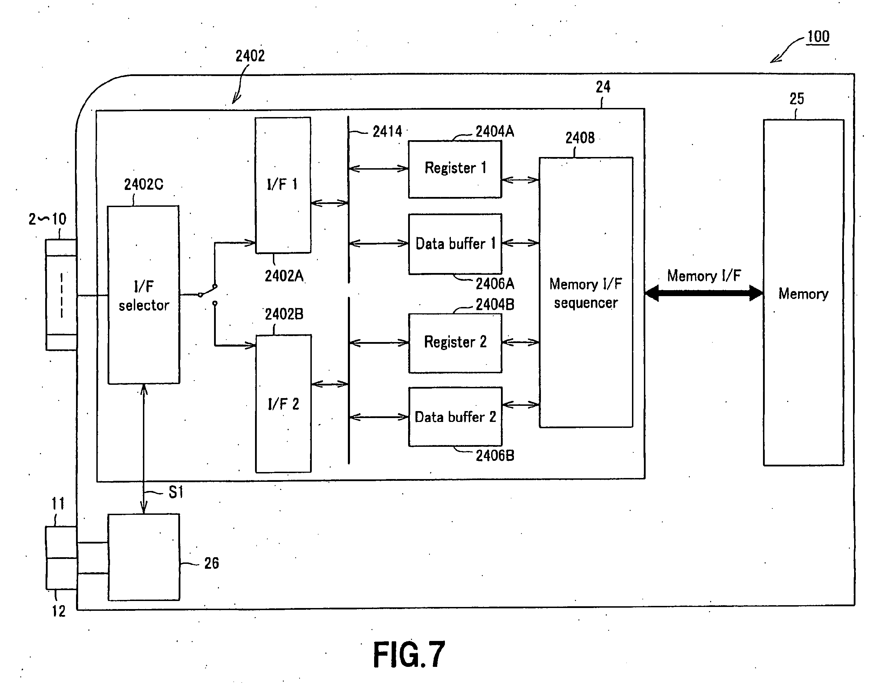

FIG. 1 is a perspective view, from above, of a memory card 100 according to the present invention, FIG. 2 is a perspective view, from below, of the memory card 100 in FIG. 1, FIG. 3 is a bottom view of the memory card, FIG. 4 is a sectional view taken along the line IV-IV in FIG. 3, FIG. 5 is a block diagram of a memory card as an example, showing the internal configuration of the memory card, FIG. 6 is a block diagram of an example of the memory card 100, and FIG. 7 is a block diagram of another example of the memory card 100.

FIG. 6 shows the correspondence between contacts on the memory card 100 and signal names.

As shown in FIGS. 1 to 4, the memory card 100 according to the present invention includes a thin plate-shaped holder 20, a memory unit 22 buried in the holder 20, a controller 24 buried in the holder 20, a plurality of first contacts 2 to 10 connected to the controller 24, a select signal generator 26 buried in the holder 20, and two second contacts 11 and 12 connected to the select signal generator 26.

Note that as the first embodiment of the present invention, the memory card 100 has two types of interfaces of which any one is to be selected for use as necessary. The two types of interfaces include, for example, an interface for the Memory Stick and an interface for the Multimedia Card.

The "interface" referred to herein is an interface to be used for data communication between the memory card 100 loaded in an external device and the external device, that is, it includes standards for types and number of signals for making the data communication, data communication procedure, etc.

According to this embodiment, the memory card 100 includes a printed circuit board 21, and the holder 20 covering the printed circuit board 21 as shown in FIG. 4. More specifically, the memory unit 22, controller 24 and select signal generator 26 are mounted on one (top) of thickness-directional surfaces of an insulating substrate, and the plurality of first contacts 2 to 10 and second contacts 11 and 12 are formed on the other surface (bottom) of the insulating substrate. Namely, a printed circuit board 21 is formed. The memory unit 22 is disposed face-to-face to the contacts 2 to 12.

An insulating synthetic resin is coated, using mold, on either thickness-directional surface of the printed circuit board 21. Thus, the printed circuit board 21 and synthetic resin are integral with each other to form the thin plate-shaped holder 20.

In this embodiment, the holder 20 has a length L₁ of 15 mm, width W₁ of 12 mm, thickness D₁ of 1.0 to 1.2 mm. The insulating synthetic resin covering both the thickness-directional surfaces of the printed circuit board 21 may be, for example, PC (polycarbonate), liquid crystal polymer or the like.

Note that although the memory unit 22 and controller 24 are illustrated separately from each other in FIG. 3, etc. for easier understanding, the memory unit 22 and controller 24 may be configured in various manners as well known, by stacking, for example.

As shown in FIG. 3, the plurality of first contacts 2 to 10 and second contacts 11 and 12 are disposed linearly along one side 2002 of the top, one of the thickness-directional surfaces, of the holder 20. The plurality of first contacts 2 to 10 and second contacts 11 and 12 form together an array on the top of the holder 20.

Also, the plurality of first contacts 2 to 10 and controller 24 are connected to each other via a conductive pattern formed on the printed circuit board 21. However, the conductive pattern is not shown in FIG. 3 for the simplicity of illustration.

The plurality of first contacts 2 to 10 includes signal terminals for sending and receiving signals to and from the controller 24, a ground terminal for supplying a ground potential to the controller 24 and memory unit 22, and a power terminal for supplying a power to the controller 24 and memory unit 22.

The contacts 2 to 8 are the signal terminals, contact 9 is the power terminal, and the contact 10 is the ground terminal. The correspondence between the contacts and signals assigned to the contacts are as shown in Table 1 below:

**Table 1**

| Contact | Signal |
|---|---|
| 2 | BS |
| 3 | DATA1 |
| 4 | DATA0 |
| 5 | DATA2 |
| 6 | INS |
| 7 | DATA3 |
| 8 | SCLK |
| 9 | Vcc |
| 10 | Vss |
| 11 | D1 |
| 12 | D2 |

Detailed explanation will be made below with reference to Table 1. The contact 2 is a signal terminal supplied with a bus state signal BS indicating a break point of data signals DATA0 to DATA3 communicated.

The contact 3 is a signal terminal for input/output of data signal DATA1, the contact 4 is a signal terminal for input/output of the data signal DATA0, the contact 5 is a signal terminal for input/output of the data signal DATA2, and the contact 7 is a signal terminal for input/output of the data signal DATA3.

The contact 6 is to detect when the memory card is inserted into or extracted from the external device. It is a signal terminal for sending and receiving an INS signal used in the external device in order to detect when the memory card is inserted into or extracted from the external device.

The contact 8 is a signal terminal supplied with a clock signal SCLK. The bus state signal BS and data signals DATA0 to DATA3 are communicated synchronously with the clock signal SCLK.

The contact 9 is a power terminal supplied with a power Vcc.

The contact 10 is a ground terminal to be connected to a ground potential Vss.

Also, the second contacts 11 and 12 are supplied with external interface select signals D1 and D2. They are connected with the select signal generator 26.

As shown in FIG. 5, which is useful in understanding the present invention, the memory unit 22 is formed from a flash memory in which data can be rewritten.

The controller 24 is to control the data input/output operation of the memory unit 22, etc. The controller 24 includes an interface unit 2402, register 2404, data buffer 2406, flash memory controller 2408, error correction unit 2410, clock generator 2412, internal bus 2414, etc.

The interface unit 2402 is connected to the first contacts 2 to 10 via which it controls data communication with the external device having the memory card 100 loaded therein.

The interface unit 2402 is set to select one of two types of interfaces as will be described later.

The register 2404 has set therein a command for write and read of data supplied from the external device via the interface unit 2402 and internal bus 2414.

The data buffer 2406 is provided between the internal bus 2414 and flash memory controller 2408 to store data.

The flash memory controller 2408 controls data communication made between the memory unit 22 and data buffer 2406.

The error correction unit 2410 is to correct an error of data, caused in the process of writing and reading the data to and from the memory unit 22.

The clock generator 2412 supplies an operation clock to each of the interface unit 2402, register 2404, data buffer 2406, flash memory controller 2408 and error correction unit 2410.

The second contacts 11 and 12 are connected to the select signal generator 26 via a conductive pattern formed on the printed circuit board 21.

The select signal generator 26 is to supply a select signal S1 to the interface unit 2402 correspondingly to the interface select signals D 1 and D2 supplied via the second contacts 11 and 12.

More specifically, when the interface select signals D 1 and D2 are logical signals (binary signal) "H" and "L", respectively, the select signal generator 26 outputs a select signal S1 whose level is "H". When the interface select signals D1 and D2 are at "L" and "H" levels, respectively, the select signal generator 26 outputs a select signal S 1 having "L" level.

Next, the interface unit 2402 will be explained in detail with reference to FIG. 6.

The interface unit 2402 includes a first interface 2402A, second interface 2402B and selector 2402C.

The first interface 2402A is configured to make data communication with the external device on the basis of one of the two types of interfaces, for example, an interface for Memory Stick.

The second interface 2402B is configured to make data communication with the external device on the basis of the other of the two types of interfaces, for example, an interface for Multimedia Card.

The selector 2402C is to connect each of the contacts 2 to 10 to one of the first and second interfaces 2402A and 2402B, selected based on the select signal S 1 supplied from the select signal generator 26. Therefore, any one of the two types of interfaces is selected by the selector 2402C. That is, in the first embodiment, the select signal generator 26 and selector 2402C form together the interface selecting means included in the present invention.

Next, the use of the memory card 100 will be explained.

To write or read data to or from the memory unit 22 in the memory card 100, the memory device 100 is inserted into the memory card slot of an external device such as an electronic device, personal computer or the like.

In the memory card slot of the external device, there are provided contacts corresponding to the aforementioned first contacts 2 to 10 and also ones corresponding to the second contacts 11 and 12. The contacts corresponding to the second contacts 11 and 12 are supplied with the interface select signals D 1 and D2, respectively. Therefore, when the memory card 100 is loaded in the memory card slot, it is supplied with the interface select signals D1 and D2 via the second contacts 11 and 12, while being supplied with a power Vcc and ground potential Vss via the plurality of first contacts 2 to 10. The select signal generator 26 supplies a select signal S1 to the interface unit 2402 correspondingly to the interface select signals D 1 and D2 supplied via the second contacts 11 and 12, so that any one of the two types of interfaces in the interface unit 2402 will be selected and thus the interface of the memory card 100 corresponds to that of the external device. Therefore, various control signals and data signals are sent and received between the memory card 100 and external device on the basis of the selected interface, and thus data can successfully be written or read from the memory unit 22.

In this example, one interface is selected based on the interface select signals supplied via the second contacts 11 and 12 and data communication is made via the selected interface. Therefore, just by inserting the memory card into the memory card slot of the external device, an interface corresponding to the interface of the external device is selected at the memory card side, which will be advantageous for improvement of the user friendliness.

Also, no interface select switch has to be provided on the memory card and any structure for turning on the switch has not to be provided in the memory card slot of the external device, which will advantageously lead to a reduced cost of production.

Note that although the memory card as the example has been explained concerning one having the first and second interfaces 2402A and 2402B provided therein as shown in FIG. 6, it may be configured as shown in FIG. 7.

More specifically, a first register 2404A and first data buffer 2406A may be provided correspondingly to the first interface 2402A and a second register 2404B and second data buffer 2406B be provided correspondingly to the second interface 2402B, as shown in FIG. 7.

The memory card thus formed can of course work similarly to the one having been explained with reference to FIGS. 1 to 6, and since the register and data buffer circuits pre-designed correspondingly to the two types of interfaces can also be adopted, the controller 24 can advantageously be designed simpler, which will contribute to reduction of the manufacturing cost.

However, in case the register 2404 and data buffer 2406 are used in common by the first and second interfaces 2402A and 2402B as in the example of Fig. 1, the circuit scale of the controller 24 can be reduced, which will advantageously reduce the manufacturing cost.

Also, the example has been explained concerning a memory card in which the select signal generator 26 is provided outside the controller 24 and an interface is selected by the controller 24 on the basis of the select signal S 1 generated by the select signal generator 26. However, the select signal generator 26 may of course be provided in the controller 24.

Also, in the described example, the first and second interfaces 2402A and 2402B are provided in the controller 24 and any one of them is selected by the selector 2402C.

Of course, a signal processor including CPU (central processing unit), memory unit to store programs, etc. may be provided in place of the first and second interfaces 2402A and 2402B and selector 2402C, and such programs may be executed by CPU in the signal processor to perform the functions of the first and second interfaces 2402A and 2402B and selector 2402C.

In this case, execution of the programs by CPU in the signal processor leads to implementation by software of a plurality of interfaces, and protocol conversion of data sent and received between the external device and controller can be done by software.

Next, the present invention will be explained concerning a memory card as a first embodiment thereof.

A memory card 100 as the first embodiment is similar to the described example except that it includes a data communication unit 30 that communicates data other than the data to be written to or read from the memory unit 22 and the second contact points 11 and 12 are used for both radio data communication by the data communication unit 30 and input of interface select signals D1 and D2.

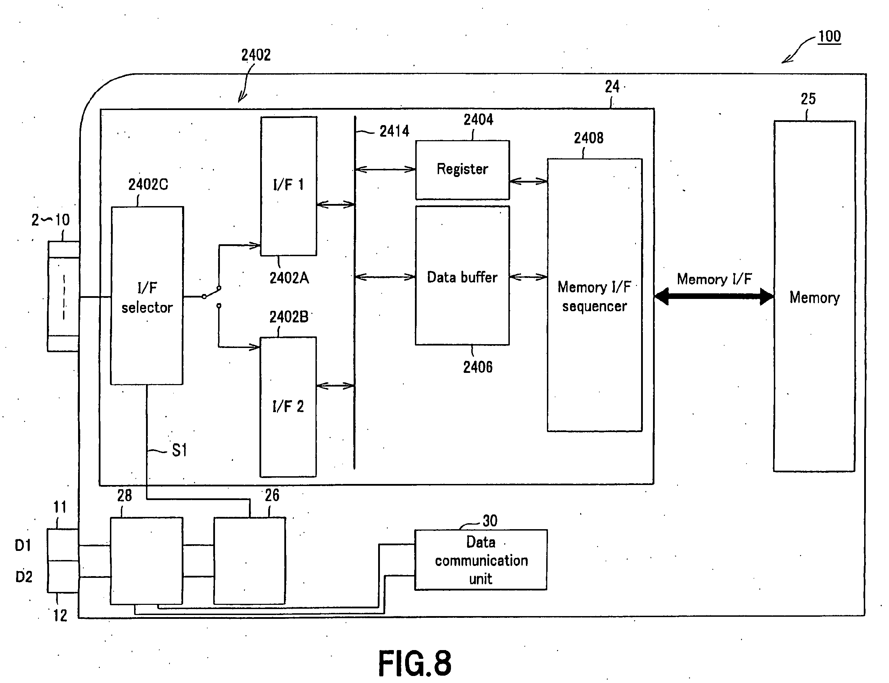

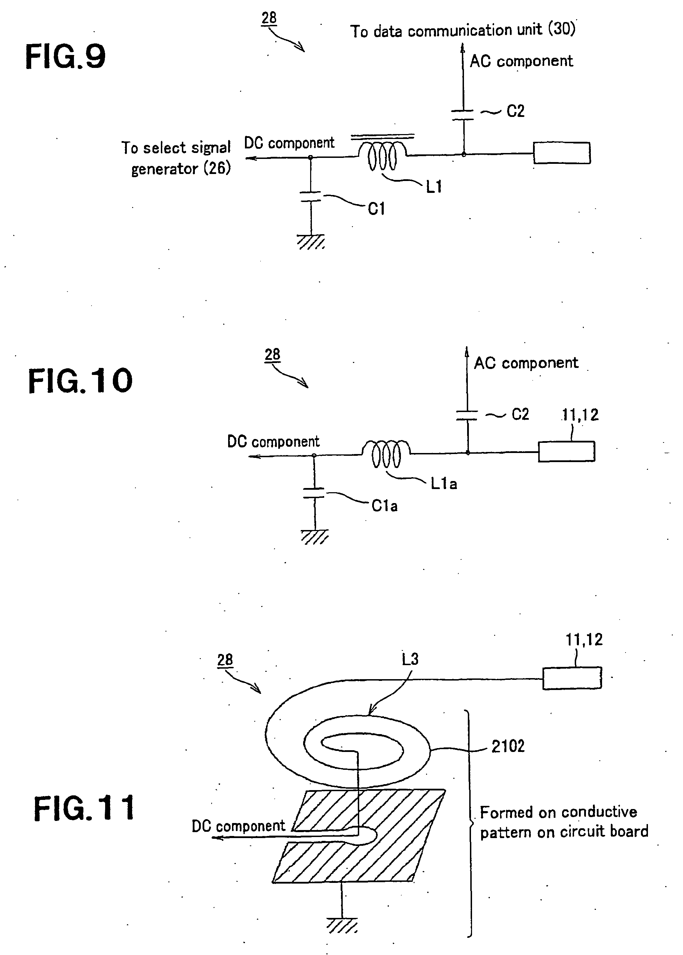

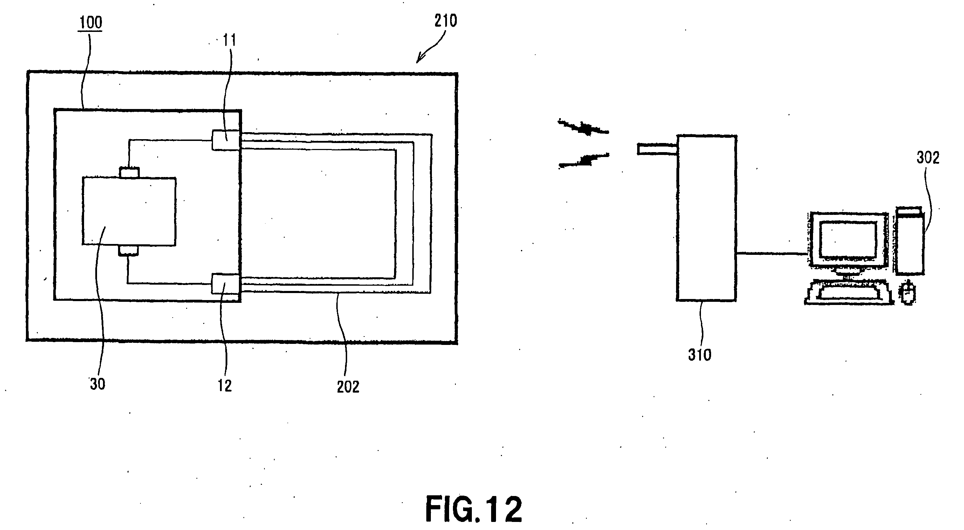

FIG. 8 is a block diagram of a memory card 100 as the first embodiment of the present invention, showing the internal configuration of the memory card 100, FIGS. 9 to 11 are circuit diagrams of a signal separator provided in the select signal generator 26, and FIG. 12 explains the operation of the data communication unit 30 in the memory card 100.

Note that the components included in the following embodiments are same or similar as or to those in the described example will be indicated with the same or similar reference numerals as or to those for the components in the example.

As shown in FIG. 8, the memory card 100 includes a signal separator 28 and data communication unit 30 in addition to the components included in the example.

The signal separator 28 is connected to the second contacts 11 and 12 to supply a radio signal supplied from an antenna being connected to these second contacts 11 and 12 as will be described later to the data communication unit 30, while supplying the interface select signals D1 and D2 supplied to the second contacts 11 and 12 to the selector 2402C. Since the radio signal is an AC signal and the interface signals D1 and D2 are DC signals, the signal separator 28 is designed to separate the AC component and DC component of a signal supplied to the second contacts 11 and 12 from each other.

As shown in FIG. 9, the signal separator 28 includes a noise and AC component eliminating capacitor C 1 connected between a ground potential and output terminals of an AC component coke coil L1 and choke coil L2, respectively, connected in series to the second contacts 11 and 12, and an AC component-pass capacitor C2 connected in series between an input terminal of the choke coil L 1 and data communication unit 30.

In the signal separator 28, a radio signal supplied to the second contacts 11 and 12 is blocked by the choke coil L1 and capacitor C1 from being transmitted to the select signal generator 26, while it is transmitted between the data communication unit 30 and second contacts 11 and 12 via the capacitor C2.

The interface select signals D1 and D2 supplied to the second contacts 11 and 12 are blocked by the capacitor C2 from being transmitted to the data communication unit 30, while they are transmitted to the select signal generator 26 via the choke coil L1.

As shown in FIG. 10, a chip coil L1a and chip capacitor C2a may be used in place of the choke coil L1 and capacitor C2 in the signal separator 28. They will work as shown in FIG. 9.

Also, a conductive pattern 2102 wound on the printed circuit board 21 may be used in place of the choke coil L1 to form a coil L3 that will provide a self-induction as shown in FIG. 11. The conductive pattern 2102 will work as in FIG. 9.

As shown in FIG. 12, the data communication unit 30 is to make bidirectional data communications by radio wave with a reader/writer via an external antenna connected thereto via the two second contacts 11 and 12. Namely, it is a non-contact IC chip which is to be mounted on a so-called non-contact IC card. The frequency used for the data communication that is made by the data communication unit 30 is 135 kHz or less, 13.56 MHz or 2.45 GHz as stipulated in the international standards. The data communication unit 30 generates a power on the basis of a received radio wave and operates with the power thus generated. That is, it has not to be supplied with any power.

The data communication unit 30 has, for example, an authentication function by which authentication data is held and communicated by the data communication to make authentication, or an electronic banking function by which electronic money data is held and communicated by the data communication to make electronic banking.

For communication with the data communication unit 30 in the memory card 100, the latter is inserted into the card slot of an electronic device 210 such as a mobile phone to connect the two second contacts 11 and 12 to an antenna 202 provided at the electronic device 210, as shown in FIG. 12. When the memory card 100, that is, the electronic device 210 having the memory card 100 loaded therein, is placed nearer to a reader/writer 310, radio wave sent from the reader/writer 310 is received by the antenna 202.

The radio wave received by the antenna 202 is supplied to the signal separator 28 via the two second contacts 11 and 12 and separated by the signal separator 28 to provide an AC component, and the AC component is supplied to the data communication unit 30.

Then, the data communication unit 30 operates with the power supplied via the radio wave to make radio wave-based data communication with the reader/writer 310 via the antenna 202. The reader/writer 310 is connected to a host device 302 such as a personal computer or the like, and the host device 302 makes the above-mentioned authentication or electronic money banking on the basis of the data communicated via the data communication unit 30 of the memory card 100 and the reader/writer 310.

For writing or reading data to or from the memory unit 22 of the memory card 100, the memory card 100 is inserted into the memory card slot of an external device such as an electronic device, personal computer or the like as in the aforementioned first embodiment. Thus, the interface select signals D 1 and D2 are supplied to the signal separator 28 via the second contacts 11 and 12, and the signal separator 28 separates the interface select signals to provide a DC component and transmits the DC component to the select signal generator 26. The select signal generator 26 supplies a select signal S 1 to the interface unit 2402 in response to the interface select signals D1 and D2, whereby any one of the two types of interfaces is selected by the interface unit 2402 for the interface of the memory card 100 to correspond to that of the external device.

Therefore, various control signals and data signals are sent and received between the memory card 100 and external device on the basis of the selected interface, whereby data can successfully be written to or read from the memory unit 22.

Note that also in the first embodiment, the select signal generator 26 and selector 2402C form together an interface selecting means.

Since the first embodiment can of course work as effectively as the aforementioned first embodiment and the second contacts 11 and 12 intended to the antenna 202 for the data communication unit 30 to make radio communication can also be used for transmission of the interface select signals D 1 and D2, it is possible to avoid the increase in number of the contacts of the memory card 100, which is advantageously contributed to a more compact design and less manufacturing cost of the memory card 100.

Next, the present invention will be explained concerning a memory card as a second embodiment thereof.

Note that the second embodiment will be explained with reference to FIG. 8 for convenience of explanation. The memory card 100 as the second embodiment of the present invention is configured for the data communication unit 30 to make data communication with the use of a differential digital signal.

The data communication with the use of a differential digital signal is such that a positive data signal + D and negative data signal - D are inputted to and outputted from the data communication unit 30 as with USB. More particularly, since a differential digital signal is transmitted as an AC component, a signal separator 28 similar to that used in the second embodiment should be provided to separate a differential digital signal as an AC component and interface select signals D 1 and D2 as a DC component from each other.

Therefore, the data communication unit 30 can of course make data communication with a differential digital signal, and when the interface select signals D 1 and D2 are supplied to the second contacts 11 and 12, the interface of the memory card 100 can be selected to correspond to that of an external device, various control signals and data signals be sent and received between the memory card 100 and external device on the basis of the selected interface, whereby data can successfully be written to or read from the memory unit 22.

Note that also in the second embodiment, the select signal generator 26 and selector 2402C form together the interface selecting included in the present invention.

Since the second embodiment can of course work as effectively as the aforementioned example and the second contacts 11 and 12 connected to an external device for the data communication unit 30 to make data communication can also be used for transmission of the interface select signals D 1 and D2, it is possible to avoid the increase in number of the contacts of the memory card 100, which is advantageously contributed to a more compact design and less manufacturing cost of the memory card 100.

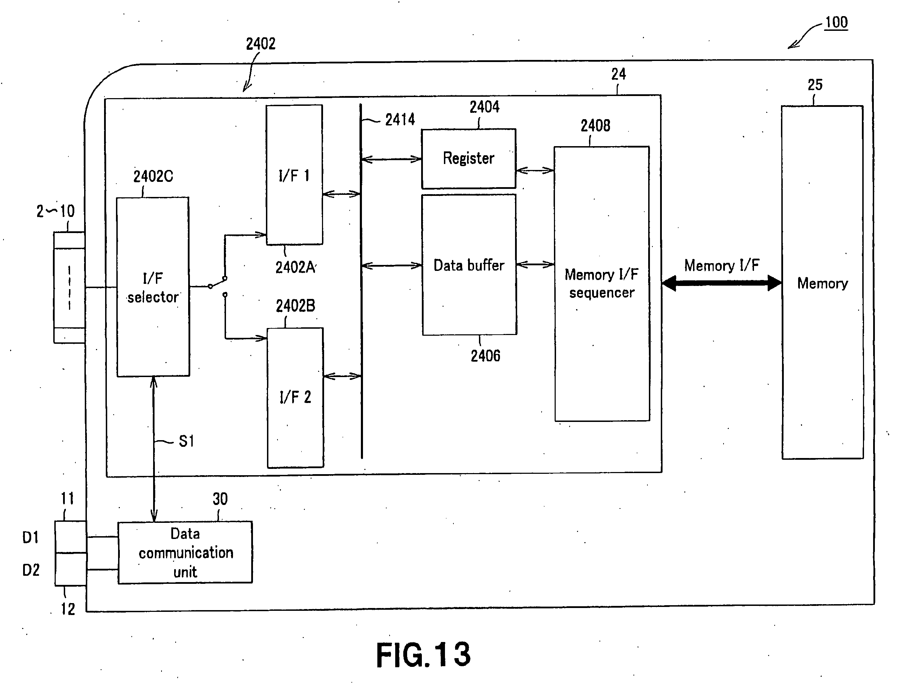

FIG. 13 is a block diagram of a memory card 100 as another example, showing the internal configuration of the memory card 100. This example is similar to the first embodiment shown in Fig. 8 except that the select signal generator 26 is not provided while the data communication unit 30 additionally has a function similar to that of the select signal generator 26. That is, the data communication unit 30 is to make data communication via an external antenna connected via the second contacts 11 and 12 as in the second embodiment.

As shown in FIG. 12, when the memory card 100 is inserted into the card slot of an external electronic device 210 such as a mobile phone or the like, the two second contacts 11 and 12 are connected to the antenna 202 provided at the electronic device 210. When the memory card 100 and electronic device 210 are placed nearer to the reader/writer 310, radio wave sent from the reader/writer 310 is received by the antenna 202. The radio wave received by the antenna 202 is supplied to the data communication unit 30 via the two second contacts 11 and 12. The radio signal initially sent from the reader/writer 310 includes an interface mode command that instructs to select an interface corresponding to the electronic device 210.

Therefore, the data communication unit 30 having received the interface mode command will supply a select signal S1 corresponding to the interface mode command to the interface unit 2402. Thus, the interface unit 2402 selects any one of the two types of interfaces so that the interface of the memory card 100 corresponds to that of the electronic device 210 as an external device. Therefore, various control signals and data signals are sent and received between the memory card 100 and electronic device 210 on the basis of the selected interface, whereby data can successfully be written to or read from the memory unit 22.

Note that, the data communication unit 30 and selector 2402C form together the interface selecting means and the command forms the interface select signal.

Since the example shown in Fig. 13 can of course work as effectively as the aforementioned first embodiment and the select signal generator 26 and signal separator 28 included in the first embodiment may not be provided in this example, the circuit of the memory card 100 can be simplified, which is advantageously contributed to a more compact design of the memory card 100.

Also, since the interface mode command can be used for instruction to select an interface, the number of selectable types of interfaces is not limited. For example, in case logical signals "H" and "L" (binary signal) are supplied to the second contacts 11 and 12, only two-bit information can be identified and thus only a total of four types of interfaces can be identified. In the example of Fig. 13, however, the number of selectable interfaces is not limited.

Another example is similar to the aforementioned second embodiment except that the select signal generator 26 is not provided while the data communication unit 30 additionally has a function similar to that of the select signal generator 26.

This example will be explained with reference to FIG. 13 for convenience of explanation. The memory card 100 is configured for the data communication unit 30 to make data communication with the use of a differential digital signal.

The differential digital signal first sent from an external device in which the memory card 100 is loaded includes an interface mode command that instructs to select an interface corresponding to the electronic device 210.

Therefore, the data communication unit 30 having received the interface mode command will supply a select signal S1 corresponding to the interface mode command to the interface unit 2402. Thus, the interface unit 2402 selects any one of the two types of interfaces so that the interface of the memory card 100 corresponds to that of the electronic device 210 as an external device.

Therefore, various control signals and data signals are sent and received between the memory card 100 and electronic device 210 on the basis of the selected interface, whereby data can successfully be written to or read from the memory unit 22.

Note that in this example, the data communication unit 30 and selector 2402C form together the interface selecting means and the command forms the interface select signal.

Since this example can of course work as effectively as the aforementioned second embodiment and the select signal generator 26 and signal separator 28 included in the second embodiment may not be provided in this example, the circuit of the memory card 100 can be simplified, which is advantageously contributed to a more compact design of the memory card 100.

Also, since the interface mode command can be used for instruction to select an interface, the number of selectable types of interfaces is not limited.

Next, the present invention will be explained concerning a memory card as another example.

This example is a variant of the aforementioned example of Fig. 13.

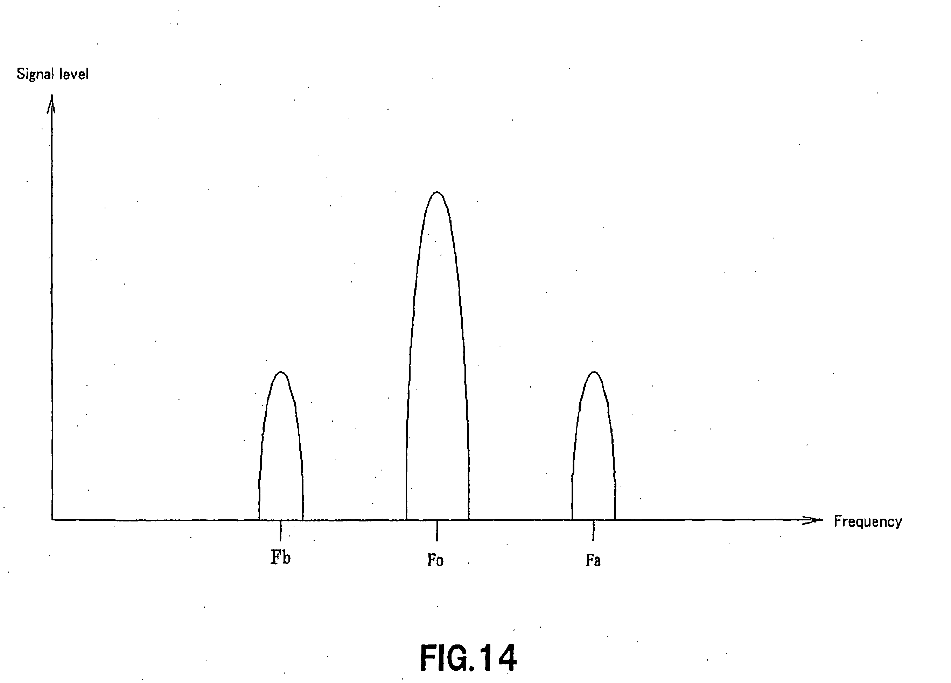

FIG. 14 shows a frequency response curve depicting the frequency band of a radio signal usable in the data communication unit 30 in a memory card.

This example will be explained with reference to FIG. 13 for convenience of explanation. The data communication unit 30 is configured to be able to make data communication on an ordinary RF communication frequency F0, while making communication of data including an interface mode command for instruction to select an interface with a radio signal whose frequency Fa is higher than the ordinary RF communication frequency F0 or with a radio signal whose frequency Fb is lower than the ordinary RF communication frequency F0, as shown in FIG. 14.

Note that this example is similar to the aforementioned example of Fig. 13 except that the data communication unit 30 and selector 2402C form together an interface selecting means and the command forms the interface select signal.

Therefore, this example can also work as effectively as the aforementioned fourth embodiment.

Next, the present invention will be explained concerning a memory card as a third embodiment thereof.

The seventh embodiment will be explained concerning a concrete example of the select signal generator 26 included in the aforementioned first to third embodiments.

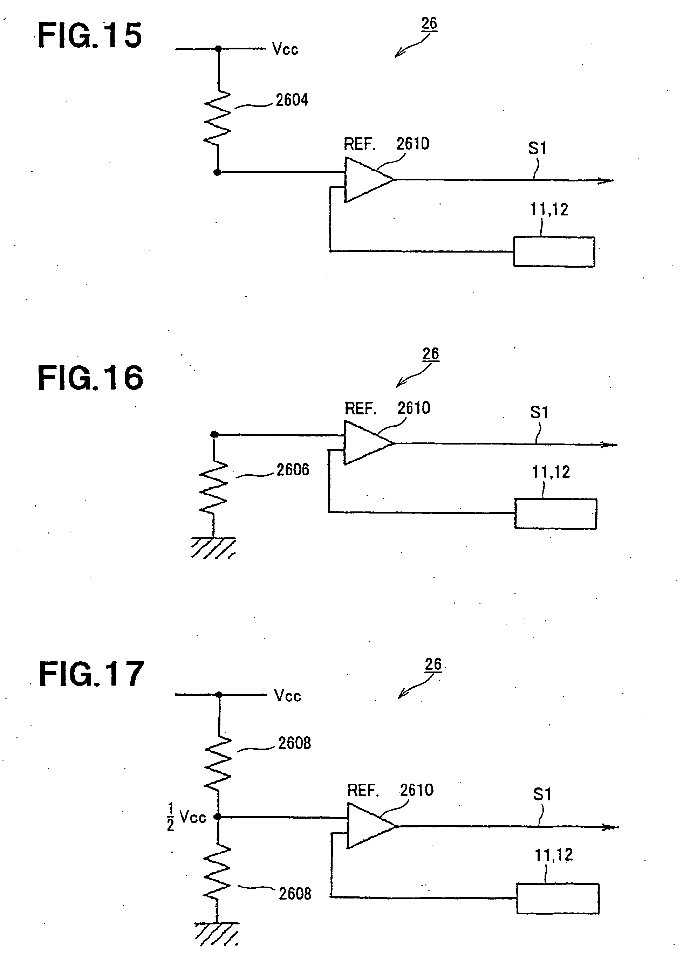

The select signal generator 26 shown in FIG. 15 is composed of a comparator 2610 and resistor 2604. The comparator 2610 has a reference voltage input terminal thereof set to "H" level (Vcc) via the resistor 2604 and a comparison voltage input terminal connected to the second contacts 11 and 12.

In this case, the comparator 2610 compares the level of input select signals D1 and D2 supplied to the second contacts 11 and 12 with the "H" level and generates a select signal S 1.

The select signal generator 26 shown in FIG. 16 is composed of a comparator 2610 and resistor 2606. The comparator 2610 has a reference voltage input terminal thereof set to "L" level (GND) via the resistor 2606 and a comparison voltage input terminal connected to the second contacts 11 and 12.

In this case, the comparator 2610 compares the level of input select signals D1 and D2 supplied to the second contacts 11 and 12 with the "L" level and generates a select signal S 1.

The select signal generator 26 shown in FIG. 17 is composed of a comparator 2610 and two resistors 2608 equal in resistance to each other. The comparator 2610 has a reference voltage input terminal thereof set to an middle voltage (Vcc/2) resulted from division of the "H" level voltage Vcc by the two resistors 2608 and a comparison voltage input terminal connected to the second contacts 11 and 12.

In this case, the comparator 2610 compares the level of input select signals D1 and D2 supplied to the second contacts 11 and 12 with the middle level voltage (Vcc/2) and generates a select signal S1.

The comparison of the select signals D1 and D2 by the select signal generator 26 and supply of the select signal S 1 to the selector 2402C are made, for example, when an external device having the memory card 100 loaded therein is turned on and power supply to the memory card 100 is started. Therefore, the external device needs not any special driver software and an interface can easily be made at the memory card 100.

Also, a card adapter permitting to have such a memory card 100 set therein and use the memory card 100 similarly to an existing memory card (such as a Memory Stick or Multimedia Card) may not have any special circuit provided therein and hence can easily be produced.

Next, the present invention will be explained concerning a memory card as a fourth embodiment thereof.

In each of the aforementioned first and second embodiments, the two second contacts 11 and 12 are provided. However, this number of second contacts is not imitative but three or more second contacts may be provided in the eighth embodiment.

In case N (a natural number larger than two) second contacts are provided in the eighth embodiment, 2^{N} types of information can be identified and hence 2^{N} types of interfaces can be selected.

Another example adopts, as an interface of the memory card 100, an interface that can be switched between a 4-bit parallel communication and 8-bit parallel communication.

The existing memory card such as a Memory stick or Multimedia Card can make serial transfer and 4-bit parallel transfer of data.

Recently, however, the memory card has been used with an imaging device such as a digital still camera or digital video camera to record or read still picture data or moving picture data in a high quality or with an audio device to record or read a large volume of audio data. For example, in case the memory card is used with an imaging device, if the data transfer rate is low, not a short time will be taken from releasing the shutter until picture data is stored into the memory card, which will disadvantageously deteriorate the operability of the imaging device and make it necessary to provide a high-speed buffer memory upstream of the memory card, which adds to the cost.

Thus, it has been demanded that the data transfer rate of the memory card should be higher.

On the other hand, to raise the data transfer rate of the memory card, it is well known to use a higher-frequency transfer clock. However, the transfer clock used in the existing memory cards is already as high as 40 MHz, for example. For a higher-frequency transfer clock, it is necessary to considerably improve the transmission channel of the existing memory cards, which will add to the cost of the latter.

Therefore, for a memory card maintaining the interchangeability with the existing memory cards and advantageous for improvement of the data transfer rate, it has been proposed to increase the bit width of transferrable data to 8 bits, for example.

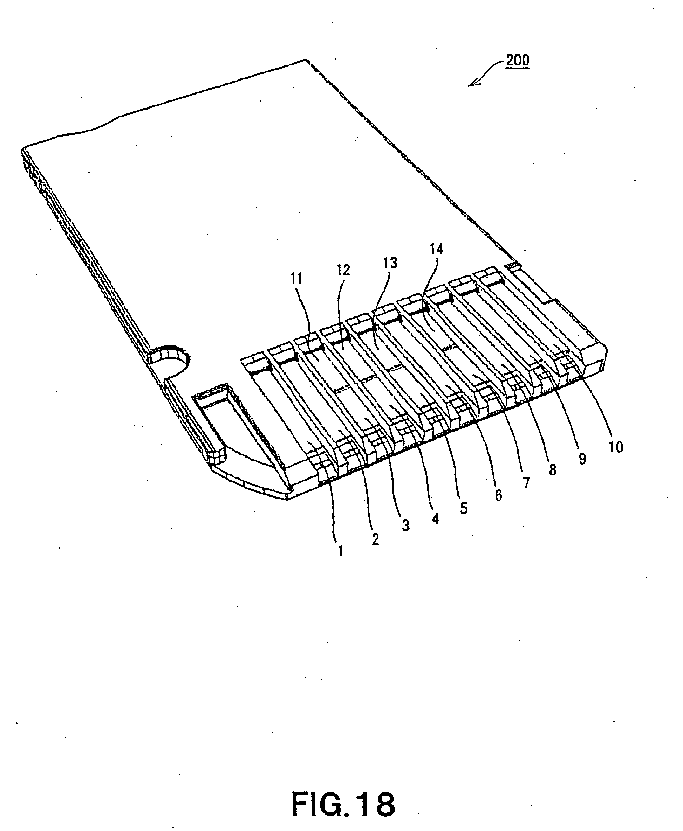

For example, in a Memory Stick 200 configured as shown in FIG. 18, some of the contacts are divided into two to additionally provide contacts (11 to 14) for 4 bits (DATA4 to DATA7) for use in the data communication.

In this case, the correspondence between the contacts and signals assigned to the contacts are as shown in Table 2 below:

**Table 2**

| | Memory Stick terminal | MMC (HS-MMC) terminal |
|---|---|---|
| 1 | Vss | DAT3 |
| 2 | BS | CMD |
| 3 | DATA1 | VSS1 |
| 4 | DATA0 | VDD |
| 5 | DATA2 | CLK |
| 6 | INS | VSS2 |
| 7 | DATA3 | DAT0 |
| 8 | SCLK | DAT1 |
| 9 | Vcc | DAT2 |
| 10 | Vss | DAT4 |
| 11 | DATA5 | DAT5 |
| 12 | DATA4 | DAT6 |
| 13 | DATA6 | DAT7 |
| 14 | DATA7 | |

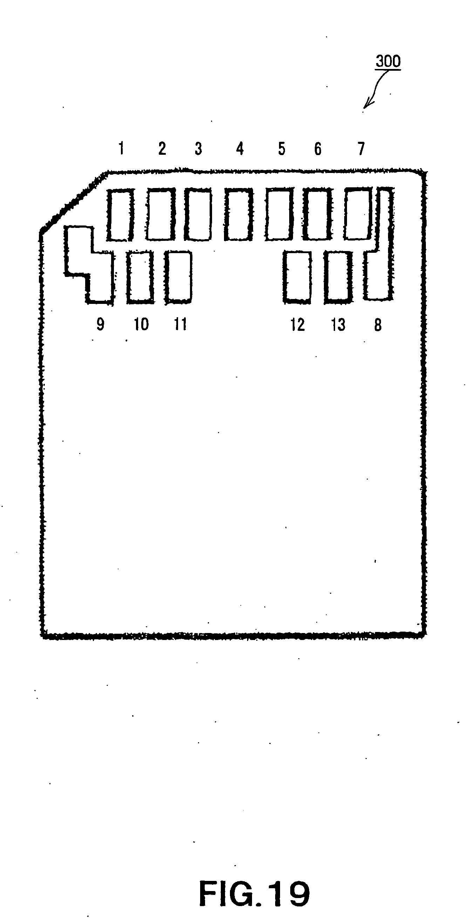

Also in a Multimedia Card 300 shown in FIG. 19, contacts (10 to 13) are additionally provided for 4 bits (DAT4 to DAT7) for use in the data communication. In this case, signals are assigned to the contacts as shown in FIG. 15. It should be noted that the contacts and signals in the Multimedia Card 300 have a relationship between as will be described below.

The contact 1 is a signal terminal for input/output of data signal DAT3, and the contacts 7 to 13 are signal terminals for input/output of data signals DAT0 and DAT2 and data signals DAT4 to DAT7.

The contact 2 is an input terminal for reception of a command CMD.

The contacts 3 and 6 are ground terminals for connection to a ground potential VSS.

The contact 4 is a power terminal for reception of a power VDD.

The contact 5 is a signal terminal for reception of a clock signal CLK.

A memory card 100 that can be switched between the 4-bit parallel communication and 8-bit parallel communication as in the existing memory cards (Memory Stick and Multimedia Card) that can be switched between the 4-bit parallel communication and 8-bit parallel communication.

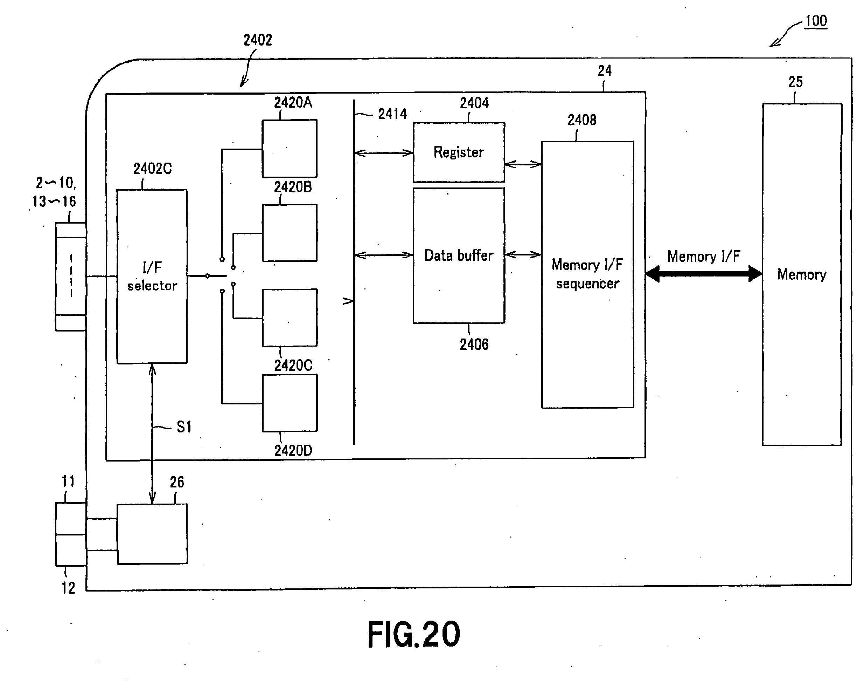

FIG. 20 is a block diagram of a memory card 100, showing the internal configuration of the memory card 100.

The memory card 100 has a total of 14 first contacts including the contacts 2 to 10 and 13 to 16, and two second contacts 11 and 12.

The controller 24 of the memory card 100 includes first to fourth interfaces 2420A, 2420B, 2420C and 2420D.

The first interface 2420A is provided for the 4-bit parallel communication in the Memory Stick.

The second interface 2420B is provided for the 8-bit parallel communication in the Memory Stick.

The third interface 2420C is provided for the 4-bit parallel communication in the Multimedia Card.

The fourth interface 2420D is provided for the 8-bit parallel communication in the Multimedia Card.

The selector 2402C is designed to select any one of the first to fourth interfaces 2420A, 2420B, 2420C and 2420D for the contacts 2 to 10 on the basis of the select signal S1 supplied from the select signal generator 26. In this case, the select signals D1 and D2 supplied to the second contacts 11 and 12 should be such that 4 types of information can be identified correspondingly to the four types of interfaces. Therefore, the select signals D1 and D2 will be supplied each as a 2-bit signal.

Note that in this example, the select signal generator 26 and selectors 2420A to 2420D form together the interface selecting means.

This example can of course work as effectively as the aforementioned example of Fig. 5, and the interfaces of the memory card 100 according to this example can accommodate plural types of data transfer, made between the memory card 100 and external device and different in bit width from each other.

Note that it is of course that the bit width of data transfer and type of the existing memory card are not limited those mentioned above.

Also, this example may of course include the signal separator 28 and data communication unit 30 similarly to the aforementioned first and second embodiments.

A further example has first contacts provided thereon correspondingly to two interfaces and independently of each other.

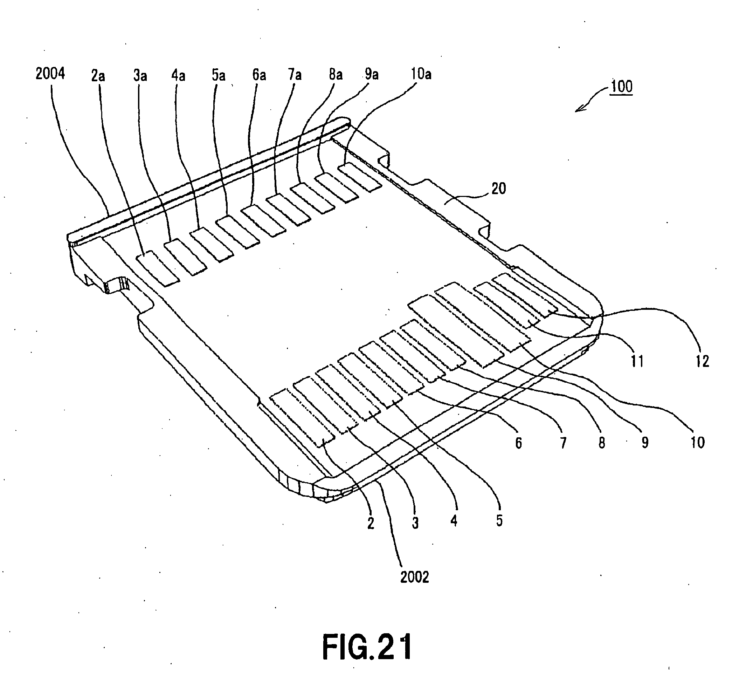

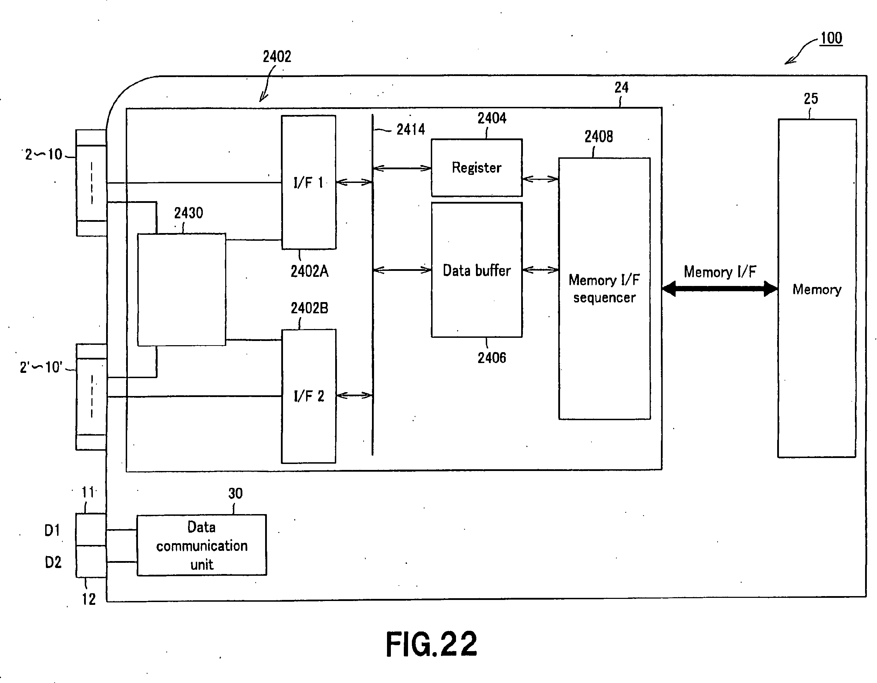

FIG. 21 is a perspective view of a memory card 100, and FIG. 22 is block diagram of the memory card 100, showing the internal configuration of the memory card 100.

In case the interfaces correspond to the Memory Stick and Multimedia Card, the contacts and signals assigned to the contacts correspond to each other as shown in Table 3 below:

**Table 3**

| | | | |
|---|---|---|---|
| | For Memory Stick | For Multimedia Card | |
| | ↓ | ↓ | |
| (A) | | | |

| Contact | I/F terminal in front row | I/F terminal in back row | Contact |
|---|---|---|---|
| 2 | BS | DAT2 | 2' |
| 3 | DATA1 | DAT3 | 3' |
| 4 | DATA0 | CMD | 4' |
| 5 | DATA2 | VSS1 | 5' |
| 6 | INS | VDD1 | 6' |
| 7 | DATA3 | VDD2 | 7' |
| 8 | SCLK | CLK | 8' |
| 9 | Vcc | DAT0 | 9' |
| 10 | Vss | DAT1 | 10' |
| 11 | D1 | | |
| 12 | D2 | | |

| (B) | | | |
|---|---|---|---|
| Contact | I/F terminal in front row | I/F terminal in back row | Contact |
| 2 | BS | DAT1 | 2' |
| 3 | DATA1 | DAT0 | 3' |
| 4 | DATA0 | CLK | 4' |
| 5 | DATA2 | VDD2 | 5' |
| 6 | INS | VDD1 | 6' |
| 7 | DATA3 | VSS1 | 7' |
| 8 | SCLK | CMD | 8' |
| 9 | Vcc | DAT3 | 9' |
| 10 | Vss | DAT2 | 10' |
| 11 | D1 | | |
| 12 | D2 | | |

Also, in case the interfaces correspond to the Memory Stick and SD Card, the contacts and signals assigned to the contacts correspond to each other as shown in Table 4 below:

**Table 4**

| | | | |
|---|---|---|---|
| | For Memory Stick | For SD Card | |
| | ↓ | ↓ | |
| (A) | | | |

| Contact | I/F terminal in front row | I/F terminal in back row | Contact |
|---|---|---|---|
| 2 | BS | DAT2 | 2' |
| 3 | DATA1 | DAT3 | 3' |
| 4 | DATA0 | CMD | 4' |
| 5 | DATA2 | VDD | 5' |
| 6 | INS | CLK | 6' |
| 7 | DATA3 | VSS | 7' |
| 8 | SCLK | DAT0 | 8' |
| 9 | Vcc | DAT1 | 9' |
| 10 | Vss | | |
| 11 | D1 | | |
| 12 | D2 | | |

| (B) | | | |
|---|---|---|---|
| Contact | I/F terminal in front row | I/F terminal in back row | Contact |
| 2 | BS | DAT1 | 2' |
| 3 | DATA1 | DAT0 | 3' |
| 4 | DATA0 | VSS1 | 4' |
| 5 | DATA2 | CLK | 5' |
| 6 | INS | VDD | 6' |
| 7 | DATA3 | CMD | 7' |
| 8 | SCLK | DAT3 | 8' |
| 9 | Vcc | DAT2 | 9' |
| 10 | Vss | | |
| 11 | D1 | | |
| | D2 | | |

In the memory card 100 as this example, the first contacts 2 to 10 for data communication via one interface, namely, via the interface of the Memory Stick, and second contacts 11 and 12 connected to the data communication unit 30 are disposed on the upper surface of the holder 20 and along one (2002) of the front and rear end faces. The first contacts 2 to 10 and second contacts 11 and 12 form together a front row on the upper surface of the holder 20.

Further, a plurality of first contacts 2a to 10a for data communication via the other interface, namely, via the interface of the Multimedia Card, is disposed on the upper surface of the holder 20 and along the rear end face (2004). These first contacts 2a to 10a form together a back row on the upper surface of the holder 20.

Signals are assigned to the first contacts 2 to 10 and other first contacts 2a to 10a as shown in Table 3(A).

Here will be explained the contacts and signals assigned to the contacts in the Multimedia Card.

The contacts 9a, 10a, 2a and 3a are input/output terminals for data signals DAT0, DAT1 and DAT3.

The contact 4a is an input terminal for reception of a command CMD.

The contact 5a is a ground terminal for connection to a ground potential VSS.

The contacts 6a and 7a are power terminals for reception of power VDD1 and VDD2.

The contact 8a is a signal terminal for reception of a clock signal CLK.

The first contacts 2 to 10 are connected to the first interface 2402A, and other first contacts 2a to 10a are connected to the second interface 2402B, as shown in FIG. 22.

The controller 24 includes a power identification unit 2430.

The power identification unit 2430 is connected to the contact 9 included in the first contacts 2 to 10 and which is the power terminal (Vcc) and contact 4a included in the other first contacts 2a to 10a and which is the power terminal (VDD). It identifies which one of these contacts has a power supplied thereto, and selects and activates any one of the first and second interfaces 2402A and 2402B on the basis of the result of identification.

More specifically, the power identification unit 2430 turns on the first interface 2402A when the power is supplied to the first contact 9. It turns on the second interface 2402B when the power is supplied to the other first contact 4a.

Also, in this example, the second contacts 11 and 12 are not used for selection of an interface but are used only for data communication by the data communication unit 30.

Note that in this example, the power identification unit 2430 is included in the interface selecting means.

Since the memory card 100 is configured, when it is inserted into the memory card slot of an external device, a power is supplied to either the first contact 9 or other first contact 4a, so that any of the interface of the Memory Stick or that of the Multimedia Card will be selected and the interface of the memory card 100 will correspond to that of the external device.

Therefore, various control signals and data signals are sent and received between the memory card 100 and external device on the basis of the selected interface, whereby data can successfully be written to or read from the memory unit 22.

In this example, an interface is selected based which of the first contacts as power terminals provided for the respective interface has the power supplied thereto, and data communication is made via the selected interface.

Therefore, as in the aforementioned example of Fig. 5, just by inserting the memory card into the memory card slot of an external device, an interface corresponding to that of the external device is selected, which will improve the user-friendliness of the memory card.

Also, since it is not necessary to provide any interface select switch on the memory card and to provide any structure for turning on the switch in the memory card slot of the external device, the memory card and external device can be produced with less cost.

Note that for use of the above-mentioned memory card 100 being set in a card adapter which is to be inserted in the slot of an existing memory card such as a Memory Stick or Multimedia Card, the first contacts 2 to 10 and other first contacts 2a to 10a of the memory card 100 should be connected to corresponding contacts of the memory card via lead wires or the like. However, if the order of signals assigned to the first contacts 2 to 10 and other first contacts 2a to 10a of the memory card 100 disagree with that of signals assigned to the contacts of the card adapter at this time, the lead wires will intersect each other and such wiring be complicated, which will be disadvantageous for reduction of the manufacturing cost. Therefore, the order in which the contacts are arrayed in the memory card 100 should desirably be as the same as that of the contacts arrayed in the card adapter as possible.

Table 3(A) shows an example in which the card memory 100 and card adapter are configured so that no matter which interface is selected for use, the memory card 100 will always be inserted into the card adapter with the first contacts 2 to 10 being directed toward the card adapter.

In this case, the order of the contacts disposed on the memory card 100 generally agrees with that of the contacts disposed on the card adapter.

Table 3(B) shows an example in which the card memory 100 and card adapter are configured so that the memory card 100 is will be inserted into the card adapter with the first contacts 2 to 10 being directed toward the card adapter when one of the interfaces is selected for use, while it will be inserted into the card adapter with the other first contacts 2a to 10a being directed toward the card adapter when the other interface is selected for use.

That is, as shown in Table 3(B), the order of the other first contacts 2a to 10a corresponding to the other interface is opposite to that shown in Table 3(A).

In this case, the memory card 100 and card adapter are configured so that the order of the contacts on the memory card 100 will generally agree with that of the contacts on the card adapter no matter which first contacts are directed toward the card adapter when the memory card 100 is inserted into the latter.

There has been explained in the foregoing example in which the interfaces correspond to the Memory Stick and Multimedia Card. However, the example is also applicable to a memory card in which the interfaces correspond to the Memory Stick and SD Card as shown in FIG. 20A.

Note that in Table 4(B), the order of the other first contacts 2a to 10a corresponding to the other interface is opposite to that shown in Table 4(A), as in Table 3(A).

According to another example, the potential at specific ones of the first contacts 2 to 10 is controlled corresponding to an interface to be selected in case the first contacts 2 to 10 are used in common for a plurality of interfaces.

In case one of the two types of interfaces is selected for the Memory Stick and Multimedia Card, respectively, the power, ground and clock input contacts of the first contacts can be used as common terminals.

Also, the bus state signal input contact (BS) for the interface of the Memory Stick and command input contact (CMD) for the interface of the Multimedia Card can be used as common terminals.

Further, the four contacts for four bits of data signal can be used as common terminals. In the case of the Multimedia Card, however, the data signal contact (DAT3) is used also as a signal input terminal for supporting a serial transfer mode called "SPI".

That is, the data signal contact (DAT3) is used also as an SPI mode select terminal. In the specification of the Multimedia Card, it is stipulated that a pull-up resistor should be provided to prevent malfunction from being caused by a noise included in a signal supplied to the SPI mode select terminal in order to positively assure the "H" level.

Therefore, explanation will be made here with reference to FIG. 6. In case the interface of the Multimedia Card is selected, the controller 24 should have a pull-up resistor (not shown) connected to the data signal contact (DAT3) thereof. In case the interface of the Memory Stick is selected, the controller 24 should have no pull-up resistor connected o the data signal contact (DAT3) thereof.

The above function can be implemented by providing a pull-up resistor and switch, connected to between the data signal contact (DAT3) and power contact (VCC), and a pull-up resistor controlling means for turning on and off the switch on the basis of the select signal S1. Otherwise, the function can be implemented by providing a pull-up resistor and switch, connected in series between the data signal contact (DAT3) and power contact (VCC), and a pull-up resistor controlling means for turning on and off the switch on the basis of a command supplied from the external device via the contact for input of a command for the interface of the Multimedia Card.

Next, there will be explained a card adapter.

The card adapter is designed to receive the memory card 100 and usable like the existing memory card.

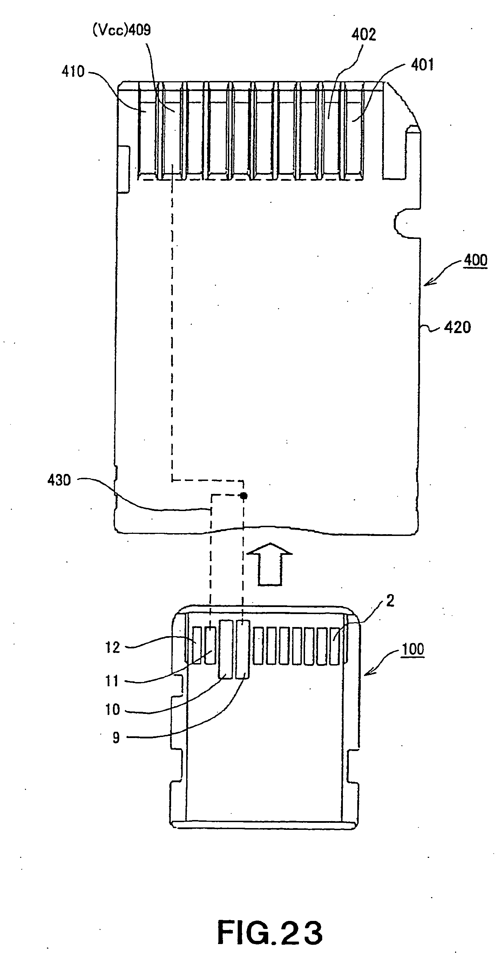

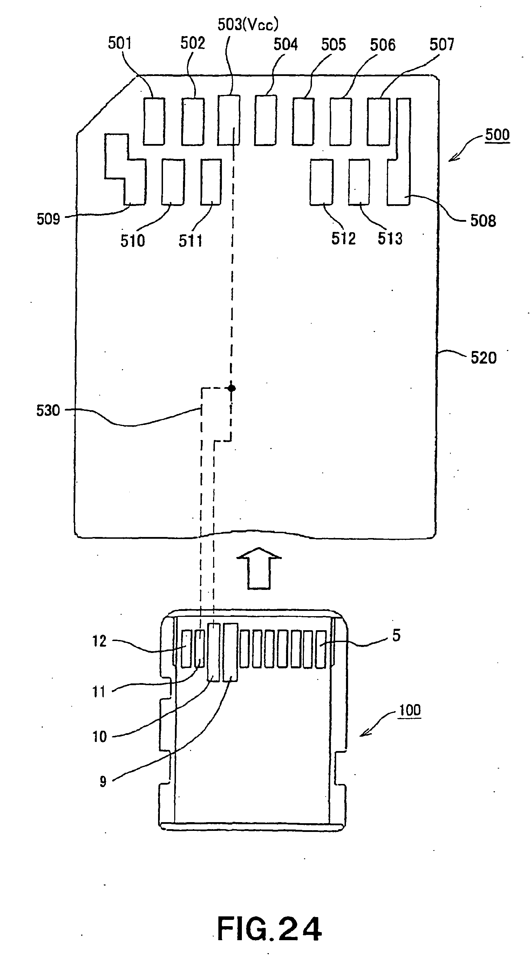

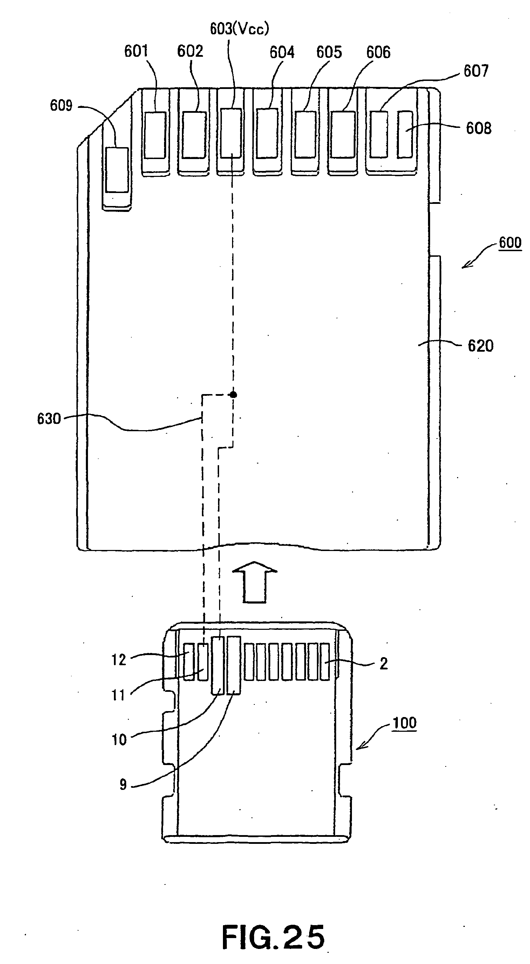

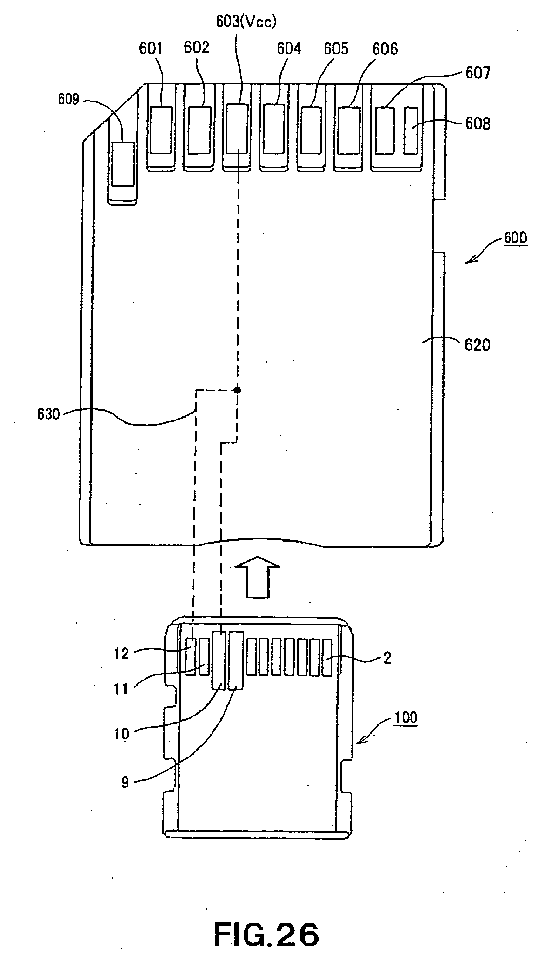

FIG. 23 is a plan view of a card adapter for the Memory Stick, FIG. 24 is a plan view of a card adapter for the Multimedia Card, FIG. 25 is a plan view of a card adapter for an SD Card, and FIG. 26 is a plan view of another example of the card adapter for the SD Card.

The card adapter will be explained below with reference to FIG. 6. The select signal generator 26 in the memory card 100 supplies the selector 2402C with the select signal S1 for selecting the first interface 2402A that makes data communication with the external device via the interface for the Memory Stick in case the interface select signal D1 supplied from the second contact 11 is at the "H" level.

Also, the select signal generator 26 is configured so that when the interface select signal D1 supplied to the second contact 11 is at the "L" level, the select signal S 1 is supplied for selecting the second interface 2402B that makes data communication with the external device via the interface for the Multimedia Card or SD Card. Therefore, only the second contact 11 is used for selection of the interface.

A card adapter 400 intended for use with the Memory Stick has ten contacts 401 to 410 arrayed along one side of a case 420 as shown in FIG. 23.

The card adapter 400 is designed to have the memory card 100 removably inserted therein, and has wires (not shown) which provide electrical connection between the first contacts 2 to 10 of the memory card 100 and first contacts 401 to 409 of the card adapter 400 with the memory card 100 being inserted in the card adapter 400.

The card adapter 400 has not provided thereon any contacts that connect with the second contacts 11 and 12 of the memory card 100. Therefore, even when the card adapter 400 having the memory card 100 inserted therein is inserted into the card slot of an external device, no interface select signal can be supplied to the second contacts 11 and 12 of the memory card 100.

On this account, the card adapter 400 has provided thereon a wire 430 that provides electrical connection between the second contact 11 and a contact 409 connected to the power contact (VCC) of the card adapter 400 when the memory card 100 is inserted in the card adapter 400.

Thus, when the card adapter 400 having the memory card 100 inserted therein is inserted into the card slot of the external device, the second contact 11 of the memory card 100 is applied with the power VCC via the wire 430. Therefore, since the power VCC, that is, a signal at the "H" level, is supplied to the second contact 11, the select signal generator 26 will supply the selector 2402C with the select signal S1 for selection of the first interface 2402A, namely, the interface for the Memory Stick, via which the data connection is made with the external device. Thus, the interface for the memory card 100 corresponds to that for the external device.

Therefore, various control signals and data signals are sent and received between the memory card 100 and external device on the basis of the interface for the Memory Stick, whereby data can successfully be written to or read from the memory unit 22.

Note that in case the select signal generator 26 operates as in case a signal at the "H" level is supplied when the input terminal is opened (at high impedance), the wire 430 shown in FIG. 23 may be omitted and the second contact 11 be open-circuited.

Also, a card adapter 500 intended for a high speed-type Multimedia Card has contacts 501 to 513 arrayed along one side of the case 420 as shown in FIG. 24. The card adapter 500 is designed to have the memory card 100 removably inserted therein, and has provided thereon wires (not shown) that provide electrical connection between the first contacts 2 to 10 of the memory card 100 and contacts 501 to 513 of the card adapter 500 with the memory card 100 being inserted in the card adapter 500.

The card adapter 500 has not provided thereon any contacts that connect with the second contacts 11 and 12 of the memory card 100. Therefore, even when the card adapter 500 having the memory card 100 inserted therein is inserted into the card slot of an external device, no interface select signal can be supplied to the second contacts 11 and 12 of the memory card 100.

On this account, the card adapter 500 has provided thereon a wire 530 that provides electrical connection between the second contact 11 and a contact 503 connected to the ground contact of the card adapter 500 when the memory card 100 is inserted in the card adapter 500. Thus, when the card adapter 500 having the memory card 100 inserted therein is inserted into the card slot of the external device, the second contact 11 of the memory card 100 is applied with the ground potential VSS via the wire 530. Therefore, since the ground potential VSS, that is, a signal at the "L" level, is supplied to the second contact 11, the select signal generator 26 will supply the selector 2502C with the select signal S1 for selection of the second interface 2502B, namely, the interface for the Multimedia Card, via which the data communication is made with the external device. Thus, the interface for the memory card 100 corresponds to that for the external device.

Therefore, various control signals and data signals are sent and received between the memory card 100 and external device on the basis of the interface for the Multimedia Card, whereby data can successfully be written to or read from the memory unit 22.

Further, a card adapter 600 intended for use with the SD Card has ten contacts 601 to 610 arrayed along one side of the case 420 as shown in FIG. 25.

Note that the shape and disposition of contacts of the SD Card and the assignment of signals to the contacts are almost the same as those of the Multimedia Card. Also, the interface for the SD Card is almost the same as that for the Multimedia card.

The card adapter 600 is designed to have the memory card 100 removably inserted therein, and has provided thereon wires (not shown) that provide electrical connection between the first contacts 2 to 10 and contacts 601 to 609 of the card adapter 600, corresponding to the first contacts 2 to 10, when the memory card 100 is inserted in the card adapter 600.

The card adapter 600 has not provided thereon any contacts which are to be connected to the second contacts 11 and 12 on the memory card 100. Therefore, when the card adapter 600 has the memory card 100 inserted therein is inserted into the card slot of an external device, no interface select signal can be supplied to the second contacts 11 and 12 of the memory card 100.

On this account, the card adapter 600 has provided thereon a wire 630 that provides electrical connection between the second contact 11 and a contact 603 connected to the ground contact of the card adapter 600 when the memory card 100 is inserted in the card adapter 500. Thus, when the card adapter 600 having the memory card 100 inserted therein is inserted into the card slot of the external device, the second contact 11 of the memory card 100 is applied with the ground potential VSS via the wire 630.

Therefore, since the ground potential VSS, that is, a signal at the "L" level, is supplied to the second contact 11, the select signal generator 26 will supply the selector 2402C with the select signal S1 for selection of the second interface 2402B, namely, the interface for the Multimedia Card, via which the data communication is made with the external device. Thus, the interface for the memory card 100 corresponds to that for the external device.

Therefore, various control signals and data signals are sent and received between the memory card 100 and external device on the basis of the interface for the Multimedia Card, whereby data can successfully be written to or read from the memory unit 22.

Note that in FIGS. 23 to 25, an interface is selected depending upon which the signal supplied to one (11) of the two second contacts 11 and 12 is, ground-level signal or power. However, the card adapter may be designed so that an interface is selected depending upon which one of the two second contacts 11 and 12 is supplied with ground-level signal as will be explained below.

FIG. 26 shows another example of the card adapter for use with the SD Card shown in FIG. 25. This card adapter is to be used in case the memory card 100 has two interfaces, that is, one for the Multimedia Card and one for the SD Card.

Explanation will be made below of the card adapter with reference to FIG. 6. The controller 24 has the first interface 2402A that is an interface for the Multimedia Card and makes data communication with an external device, second interface 2402B that is an interface for the SD Card and makes data communication with the external device, and a selector 2402C that selects either of the first and second interfaces 2402A and 2402B.

The select signal generator 26 supplies the selector 2402C with a select signal S1 used to select the first interface 2402A when a ground-level signal is supplied to the second contact 11, and to select the second interface 2402B when a ground-level signal is supplied to the second contact 12.

Thus, when the memory card 100 is inserted into the card adapter 500 shown in FIG. 22, it will select the interface of the Multimedia Card. When the memory card 100 is inserted into the card adapter 600 shown in FIG. 26, it will select the interface of the SD Card.

Note that although in the example shown in FIG. 26, an interface is selected depending upon which one of the two second contacts 11 and 12 is supplied with the ground-level signal, the signal to be supplied to the two second contacts 11 and 12 may be at an arbitrary level. Namely, the signal level may be any one as long as the interface can be identified.

Note that the examples of Figs. 23-26 include a means for supplying power supplied from an external device or a ground potential to the second contact included in the present invention via the wire 430, 530 or 630.

Even if the external device has only the card slot for the existing memory cards, a signal equivalent to the interface select signal can be supplied to the select signal generator 26 in the memory card 100 via the wire 430, 530 or 630 provided on the card adapter 400, 500 or 600 configured as above to select any one of the plural interfaces of the memory card 100.

In the foregoing, the present invention has been explained concerning the Memory Stick, Multimedia Card and SD Card each as the memory card 100. However, the memory card 100 is not limited in type to the Memory Stick, Multimedia Card and SD Card.

Also, the present invention has been explained concerning the memory cards in which the memory unit 22 is a flash memory in which data can be rewritten. According to the present invention, however, the memory unit 22 is not limited to the flash memory but it may be any memory to and/or from which data can be written and/or read.

## Claims

1. A memory card (100), comprising:
a thin plate-formed holder (20) made of an insulating material;
a memory unit (22) buried in the holder and to and/or from which data can be written and/or read;
first contacts (2,... 10) provided on the surface of the holder (20);
a controller (24) buried in the holder (20) to write and/or read data to the memory unit (22) by making data communication with an external device via the first contacts (2, ... 10) buried in the holder (20); and
pre-set interfaces (2402A, 2402B) provided in the controller (24) to make data communication with the external device the pre-set interfaces (2402A, 2402B) being of plural types,
at least two second contacts (11, 12) being provided on the surface of the holder (20) separately from the first ones,
an interface selecting means (26, 2402C) for selecting one of the plural types of interfaces (2402A, 2402B) on the basis of an interface select signal supplied via the second contacts (11, 12),
a data communication unit (30) buried in the holder (20) to send and/or receive data other than the data in the memory unit (22) by radio data communication,
a signal separator (28) being connected to the interface selecting means (26, 2402C), the data communication unit (30) and the at least two second contacts (11, 12), , wherein the controller (24) is adapted to make data communication via the first contacts (2,...10) on the basis of an interface selected by the interface selecting means (26, 2402C), and wherein
the signal separator (28) is adapted to separate the interface select signal from the radio data communication signal.

2. The memory card according to claim 1, wherein the controller (24) includes plural types of interfaces units (2402) provided for each of the plural types of interfaces (2402A, 2402B) and which control data communication with the external device and a selector (2402C) to select one of the plural types of interfaces on the basis of the interface select signal and connect it to the first contact, and the interface selecting means includes the selector (2402C).

3. The memory card according to claim 2, wherein the interface select signal is a logical signal, there is provided a select signal generator (26) to generate a select signal on the basis of the logical state of the interface select signal supplied via the at least two second contacts (11, 12) and the signal separator (28), the interface selection by the selector (2402C) is made on the basis of the select signal, and the interface selecting means includes the select signal generator (26) and selector (2402C).

4. The memory card according to claim 2, wherein the controller (24) includes a data buffer (2406) to buffer data between the plural types of interface units and memory unit.

5. The memory card according to claim 4, wherein the data buffer (2406) is provided for each of the plural types of interface units.

6. The memory card according to claim 1, wherein the data communication unit (30) is to make radio data communication via an external antenna (202) connected thereto via the at least two second contacts (11, 12).

7. The memory card according to claim 1, wherein the data communication unit (30) is to send and receive positive data or negative data in a differential manner to an external device connected thereto via the at least two second contacts (11, 12).

8. The memory card according to claim 1, wherein the signal separator (28) is adapted to separate a signal supplied to the at least two second contacts (12) into AC and DC components, the AC component separated by the signal separator (28) is supplied to the data communication unit (30), and the DC component separated by the signal separator (28) is supplied as the interface select signal to the interface selecting means (26, 2402C).

## Patentansprüche

1. Speicherkarte (100), mit:
einer Halterung (20) in Form einer dünnen Platte, die aus einem Isoliermaterial hergestellt ist;
einer Speichereinheit (22), die in die Halterung eingebettet ist und in die und/oder aus der Daten geschrieben und/oder gelesen werden können;
ersten Kontakten (2, ..., 10), die auf der Oberfläche der Halterung (20) vorgesehen sind;
einer Steuereinheit (24), die in die Halterung (20) eingebettet ist, um Daten in die Speichereinheit (22) zu schreiben und/oder um hieraus Daten zu lesen, indem über die ersten Kontakte (2, ..., 10), die in die Halterung (20) eingebettet sind, eine Datenkommunikation mit einer externen Vorrichtung ausgeführt wird; und
voreingestellten Schnittstellen (2402A, 2402B), die in der Steuereinheit (24) vorgesehen sind, um eine Datenkommunikation mit der externen Vorrichtung auszuführen, wobei die voreingestellten Schnittstellen (2402A, 2402B) von mehreren Typen sind,
wenigstens zwei zweiten Kontakten (11, 12), die auf der Oberfläche der Halterung (20) getrennt von den ersten Kontakten vorgesehen sind,
einem Schnittstellenauswahlmittel (26, 2402C), um einen der mehreren Typen von Schnittstellen (2402A, 2402B) anhand eines über die zweiten Kontakte (11, 12) zugeführten Schnittstellenauswahlsignals auszuwählen,
einer Datenkommunikationseinheit (30), die in die Halterung (20) eingebettet ist, um Daten, die von den Daten in der Speichereinheit (22) verschieden sind, durch Funkdatenkommunikation zu senden und/oder zu empfangen,
einem Signalseparator (28), der mit dem Schnittstellenauswahlmittel (26, 2402C), der Datenkommunikationseinheit (30) und den wenigstens zwei zweiten Kontakten (11, 12) verbunden ist, wobei die Steuereinheit (24) dazu ausgelegt ist, eine Datenkommunikation über die ersten Kontakte (2, ..., 10) anhand einer Schnittstelle, die durch das Schnittstellenauswahlmittel (26, 2402C) ausgewählt wird, auszuführen, und wobei
der Signalseparator (28) dazu ausgelegt ist, das Schnittstellenauswahlsignal von dem Funkdatenkommunikationssignal zu separieren.

2. Speicherkarte nach Anspruch 1, wobei die Steuereinheit (24) mehrere Typen von Schnittstelleneinheiten (2402), die für jeden der mehreren Typen von Schnittstellen (2402A, 2402B) vorgesehen sind und die eine Datenkommunikation mit der externen Vorrichtung steuern, und eine Auswahleinrichtung (2402C), um einen der mehreren Typen von Schnittstellen anhand des Schnittstellenauswahlsignals zu wählen und ihn mit dem ersten Kontakt zu verbinden, enthält und das Schnittstellenauswahlmittel die Auswahleinrichtung (2402C) enthält.

3. Speicherkarte nach Anspruch 2, wobei das Schnittstellenauswahlsignal ein Logiksignal ist und ein Auswahlsignalgenerator (26) vorgesehen ist, um anhand des logischen Zustands des Schnittstellenauswahlsignals, das über die wenigstens zwei zweiten Kontakte (11, 12) und den Signalseparator (28) zugeführt wird, ein Auswahlsignal zu erzeugen, wobei die Schnittstellenauswahl durch die Auswahleinrichtung (2402C) anhand des Auswahlsignals ausgeführt wird und wobei das Schnittstellenauswahlmittel den Auswahlsignalgenerator (26) und die Auswahleinrichtung (2402C) enthält.

4. Speicherkarte nach Anspruch 2, wobei die Steuereinheit (24) einen Datenpuffer (2406) enthält, um Daten zwischen den mehreren Typen von Schnittstelleneinheiten und der Speichereinheit zu puffern.

5. Speicherkarte nach Anspruch 4, wobei der Datenpuffer (2406) für jeden der mehreren Typen von Schnittstelleneinheiten vorgesehen ist.

6. Speicherkarte nach Anspruch 1, wobei die Datenkommunikationseinheit (30) dazu dient, über eine externe Antenne (202), die mit ihr über die wenigstens zwei zweiten Kontakte (11, 12) verbunden ist, eine Funkdatenkommunikation auszuführen.

7. Speicherkarte nach Anspruch 1, wobei die Datenkommunikationseinheit (30) dazu dient, positive Daten oder negative Daten auf differentielle Weise über die wenigstens zwei zweiten Kontakte (11, 12) zu einer externen Vorrichtung, die mit ihr verbunden ist, zu senden oder hiervon zu empfangen.

8. Speicherkarte nach Anspruch 1, wobei der Signalseparator (28) dazu ausgelegt ist, ein Signal, das den wenigstens zwei zweiten Kontakten (12) zugeführt wird, in Wechselstrom- und Gleichstromkomponenten zu separieren, wobei die durch den Signalseparator (28) separierte Wechselstromkomponente der Datenkommunikationseinheit (30) zugeführt wird und die durch den Signalseparator (28) separierte Gleichstromkomponente als das Schnittstellenauswahlsignal dem Schnittstellenauswahlmittel (26, 2402C) zugeführt wird.

## Revendications

1. Carte de mémoire (100), comprenant :
un support (20) en forme de plaque mince constitué d'un matériau isolant ;
une unité de mémoire (22) enfouie dans le support et dans et/ou à partir de laquelle des données peuvent être écrites et/ou lues ;
des premiers contacts (2, ... 10) prévus sur la surface du support (20) ;
un contrôleur (24) enfoui dans le support (20) pour écrire et/ou lire des données dans l'unité de mémoire (22) en effectuant une communication de données avec un dispositif externe par l'intermédiaire des premiers contacts (2, ... 10) enfouis dans le support (20) ; et
des interfaces prédéterminées (2402A, 2402B) prévues dans le contrôleur (24) pour effectuer une communication de données avec le dispositif externe, les interfaces prédéterminées (2402A, 2402B) étant de plusieurs types,
au moins deux deuxièmes contacts (11, 12) étant prévus sur la surface du support (20) séparément des premiers contacts,
des moyens de sélection d'interface (26, 2402C) pour sélectionner l'un de la pluralité de types d'interfaces (2402A, 2402B) sur la base d'un signal de sélection d'interface fourni par l'intermédiaire des deuxièmes contacts (11, 12),
une unité de communication de données (30) enfouie dans le support (20) pour envoyer et/ou recevoir des données autres que les données dans l'unité de mémoire (22) par radiocommunication de données,
un séparateur de signal (28) qui est connecté aux moyens de sélection d'interface (26, 2402C), à l'unité de communication de données (30) et auxdits au moins deux deuxièmes contacts (11, 12), dans laquelle le contrôleur (24) est conçu pour effectuer une communication de données par l'intermédiaire des premiers contacts (2, ... 10) sur la base d'une interface sélectionnée par les moyens de sélection d'interface (26, 2402C), et dans laquelle
le séparateur de signal (28) est conçu pour séparer le signal de sélection d'interface du signal de radiocommunication de données.

2. Carte de mémoire selon la revendication 1, dans laquelle le contrôleur (24) comprend plusieurs types d'unités d'interface (2402) prévues pour chacun de la pluralité de types d'interfaces (2402A, 2402B) et qui commandent la communication de données avec le dispositif externe et un sélecteur (2402C) pour sélectionner l'un de la pluralité de types d'interfaces sur la base du signal de sélection d'interface et le connecter au premier contact, et les moyens de sélection d'interface comprennent le sélecteur (2402C).

3. Carte de mémoire selon la revendication 2, dans laquelle le signal de sélection d'interface est un signal logique, il est prévu un générateur de signal de sélection (26) pour générer un signal de sélection sur la base de l'état logique du signal de sélection d'interface fourni par l'intermédiaire desdits au moins deux deuxièmes contacts (11, 12) et du séparateur de signal (28), la sélection d'interface par le sélecteur (2402C) est effectuée sur la base du signal de sélection, et les moyens de sélection d'interface comprennent le générateur de signal de sélection (26) et le sélecteur (2402C).

4. Carte de mémoire selon la revendication 2, dans laquelle le contrôleur (24) comprend une mémoire tampon de données (2406) pour mettre en mémoire tampon les données entre la pluralité de types d'unités d'interface et l'unité de mémoire.

5. Carte de mémoire selon la revendication 4, dans laquelle la mémoire tampon de données (2406) est prévue pour chacun de la pluralité de types d'unités d'interface.

6. Carte de mémoire selon la revendication 1, dans laquelle l'unité de communication de données (30) sert à effectuer une radiocommunication de données par l'intermédiaire d'une antenne externe (202) connectée à celle-ci par l'intermédiaire desdits au moins deux deuxièmes contacts (11, 12).

7. Carte de mémoire selon la revendication 1, dans laquelle l'unité de communication de données (30) sert à envoyer et recevoir des données positives ou des données négatives d'une manière différentielle vers et d'un dispositif externe connecté à celle-ci par l'intermédiaire desdits au moins deux deuxièmes contacts (11, 12).

8. Carte de mémoire selon la revendication 1, dans laquelle le séparateur de signal (28) est conçu pour séparer un signal fourni auxdits au moins deux deuxièmes contacts (12) en des composantes alternative et continue, la composante alternative séparée par le séparateur de signal (28) est fournie à l'unité de communication de données (30), et la composante continue séparée par le séparateur de signal (28) est fournie en tant que signal de sélection d'interface aux moyens de sélection d'interface (26, 2402C).
